(19) **Europäisches Patentamt / European Patent Office / Office européen des brevets**

(11) **EP 1 673 728 B1**

(12) **FASCICULE DE BREVET EUROPEEN**

(45) Date de publication et mention
de la délivrance du brevet:
**11.04.2007 Bulletin 2007/15**

(21) Numéro de dépôt: **04816231.7**

(22) Date de dépôt: **22.09.2004**

(51) Int Cl.:
*G06T 5/40* (2006.01)

(86) Numéro de dépôt international:
**PCT/FR2004/050455**

(87) Numéro de publication internationale:
**WO 2005/031646 (07.04.2005 Gazette 2005/14)**

(54) **PROCEDE ET SYSTEME POUR M7DIFIER UNE IMAGE NUMÉRIQUE DE MANIERE DIFFERENCIEE ET QUASI REGULIERE PAR PIXEL**

VERFAHREN UND SYSTEM ZUM DIFFERENTIELLEN UND REGELMÄSSIGEN MODIFIZIEREN EINES DIGITALEN BILDES NACH PIXELN

METHOD AND SYSTEM FOR DIFFERENTIALLY AND REGULARLY MODIFYING A DIGITAL IMAGE BY PIXEL

(84) Etats contractants désignés:
**AT BE BG CH CY CZ DE DK EE ES FI FR GB GR HU IE IT LI LU MC NL PL PT RO SE SI SK TR**

(30) Priorité: **23.09.2003 FR 0350596**

(43) Date de publication de la demande:
**28.06.2006 Bulletin 2006/26**

(73) Titulaire: **DO LABS**
**92100 Boulogne Billancourt (FR)**

(72) Inventeurs:
• **CHAUVILLE, Benoit**
**F-75012 Paris (FR)**
• **KRAAK, Michael**
**F-92100 Boulogne (FR)**

• **GUICHARD, Frédéric**
**F-75012 Paris (FR)**

(74) Mandataire: **Grynwald, Albert**
**SCHMIT - CHRETIEN - SCHIHIN SNC - CABINET GRYNWALD**
**16 Rue de la Paix**
**75002 Paris (FR)**

(56) Documents cités:
**EP-A- 0 961 224          US-B1- 6 208 766**

• **PIZER S M ET AL: "ADAPTIVE HISTOGRAM EQUALIZATION AND ITS VARIATIONS" COMPUTER VISION GRAPHICS AND IMAGE PROCESSING, ACADEMIC PRESS, DULUTH, MA, US, vol. 39, no. 3, septembre 1987 (1987-09), pages 355-368, XP001002914**

EP 1 673 728 B1

## Description

### Préambule de la description

*Domaine concerné, problème posé*

La présente invention concerne un procédé et un système pour modifier une image numérique de manière différenciée et quasi régulière par pixel.

Le procédé vise, en particulier, à rendre local tout algorithme de modification, notamment d'amélioration, d'images numériques agissant normalement de façon uniforme sur l'image, tout en contrôlant la variation locale de la modification afin de ne pas faire apparaître d'artefacts visuels. L'invention concerne notamment les algorithmes d'amélioration du contraste et une façon de les localiser.

### Art antérieur

Il existe un grand nombre d'algorithmes de modifications des images numériques, fonction de paramètres dépendant de l'image numérique, les mêmes valeurs de paramètres étant utilisées pour modifier les valeurs de l'ensemble des pixels de l'image.

Le document US6208766 divulgue une méthode pour améliorer le contraste d'une image en calculant une clarté moyenne et un contraste moyen de l'image. Ces valeurs de paramètres sont interpolées dans toute l'image, afin de fournir une fonction globale de compensation.

Citons par exemple,

- des algorithmes d'amélioration du contraste tel que notamment celui décrit dans le procédé décrit dans FR2847697, déposée le 27 Novembre 2002 au nom de la société Vision IQ et sous le titre : « Procédé et système d'amélioration du contraste d'images numérisées ». Dans cette demande, il est décrit un procédé d'amélioration du contraste d'une image numérique pouvant opérer une modification de l'image numérique au moyen d'une table de correspondance ; cette dernière étant déterminée en fonction de quantités de détails ou de quantité de pixels sombres ou clairs ou du niveau du blanc ou du niveau du noir ou de l'histogramme des valeurs de pixels de l'image numérique, etc... Dans cet exemple de procédé, la modification de l'image numérique est globale, au sens où deux pixels ayant les mêmes valeurs de pixels seront modifiés de la même façon. Dans cet exemple, encore, la table de correspondance où les quantités permettant sa détermination peuvent être considérées comme des valeurs de paramètres globaux, car ils déterminent pour les pixels de l'image un traitement indépendant de leur position.
- des algorithmes de déflouage, le ou les paramètres pouvant être alors des informations relatives au noyau du flou ou à la quantité ou statistique de bruit, etc...

Or, il pourrait être avantageux de modifier chaque pixel de l'image numérique avec des valeurs de paramètres différentes par exemple selon la position du pixel dans l'image.

Précisons tout d'abord que nous excluons a priori les algorithmes pour lesquels toutes les valeurs de paramètres sont prédéterminées pour chaque pixel et indépendant du contenu de l'image numérique. C'est notamment le cas d'algorithme de compensation' des distorsions (voir notamment le procédé tel que décrit dans la demande de brevet WO03007238, « Method and System for Calculating a Transformed Image From a Digital Image ») ou d'algorithme de compensation du flou induit par l'optique de l'appareil (voir notamment le procédé tel que décrit dans la demande de brevet W003007243, « Method and System for Modifying a Digital Image Taking Into Account Its Noise ») . Dans ces cas, la distorsion et/ou la quantité de flou, induites par l'optique, sont indépendantes de l'image, et peuvent être prédéterminées pour chaque pixel de façon indépendante au contenu de l'image pour toutes les images issues d'un même appareil à configuration optique figée.

Le procédé et système, objet de l'invention, vise à localiser des algorithmes pour lesquels au moins la valeur d'un des paramètres est déterminée et/ou modifiée en fonction du contenu de l'image. Certaines techniques classiques confèrent à de tels algorithmes de modification d'image un caractère local :

Il y a tout d'abord des outils interactifs proposant à un utilisateur de détourer la partie de l'image à modifier. Cette solution ne garantit pas que la modification de la partie de l'image désignée ne génèrera pas des « artefacts » visuels, notamment aux bords de la partie détourée. Par exemple les valeurs de deux pixels contigus ayant des valeurs proches, l'un étant dans la partie d'image détourée, l'autre non, seront modifiées différemment ce qui peut générer une sensation de « bord », entre ces deux pixels, qui n'existait pas dans l'image initiale.

Il y a ensuite un certain nombre d'algorithmes où au moins un paramètre (qu'il soit implicite ou explicite) varie en fonction de chaque pixel. Par exemple, dans les images numériques de type photographique pour compenser une sous exposition (ou de façon similaire une surexposition) d'une partie de l'image, on peut soustraire à la valeur d'un pixel x, une valeur, fonction de moyenne locale des valeurs des pixels situés dans un voisinage du pixel x. Dans cet exemple, la moyenne locale est le paramètre, qui pour chaque pixel va déterminer la modification de ces valeurs. Un tel algorithme est local car la moyenne locale ainsi définie peut varier de pixel à pixel. L'effet de l'algorithme sur une image est le suivant : les valeurs de pixels d'une partie trop lumineuse de l'image, correspondant à des valeurs de pixel élevées, sont réduites. De même les valeurs de pixels d'une partie trop sombre de l'image, correspondant à des valeurs de pixel faibles, sont augmentées. De cette façon, les parties trop claires seront « assombries » et les parties trop sombres seront « éclairées ». Néanmoins, un problème arrive au niveau des transitions entre les parties claires et les parties sombres de l'image. En effet, une telle modification fait apparaître un halo le long de la transition. Ce halo est dû au fait que le paramètre (ici la moyenne locale) varie en dehors de la zone de transition et en particulier en des zones où l'image numérique ne varie pas ou peu. La variation du paramétrage (ici la moyenne locale) induit une modification de l'image numérique faisant apparaître des variations là où initialement l'image numérique ne variait pas.

Le procédé et système objet de l'invention vise à éviter qu'une modification de l'image numérique, paramétrée localement, génère ce genre d'artefact. Pour cela, le paramétrage est régularisé de telle sorte que ces variations soient en un sens plus faible que celle de l'image numérique.

**Solution**

*Procédé*

L'invention concerne un procédé pour modifier une image numérique composée de pixels ayant des valeurs de pixels. L'image numérique est décomposée en zones. Chacun des pixels est associé à au moins une zone voisine. Au moins une valeur de zone est affectée à chacune des zones Zi. Au moins une valeur de paramètre Vpij est affectée à chacune des zones Zi. Un ensemble de couples (Zi.Vpij), composés d'une zone Zi et d'une valeur de paramètre Vpij associée à la zone, constitue une image des paramètres. Le procédé comprend l'étape (a) de déterminer des valeurs de paramètre déterminées Vpir, notamment en fonction des valeurs de zone de l'image numérique, pour chaque zone. L'image des paramètres ainsi constituée est ci-après dénommée l'image des paramètres déterminée. Les valeurs de zone varient entre au moins une des zones et une zone contiguë, cette variation est ci-après dénommée la variation de l'image numérique. Les valeurs de paramètre déterminées varient entre la zone et au moins une zone contiguë, cette variation est ci-après dénommée la variation de l'image des paramètres déterminée.

Le procédé comprend en outre l'étape (b) de régulariser l'image des paramètres déterminée en fonction de la variation de l'image numérique, en réduisant les variations de l'image des paramètres déterminée, pour produire une image des paramètres ayant un niveau de variation plus faible que celui des variations de l'image numérique. Cette image des paramètres est ci-après dénommée l'image régularisée des paramètres.

Le procédé comprend en outre l'étape (c) de modifier les valeurs de pixel d'un pixel déterminé de ladite image numérique en fonction des valeurs de paramètre de ladite image régularisée des paramètres, relatives aux zones voisines dudit pixel déterminé.

L'image numérique est ainsi modifiée de manière différenciée pour chacun desdits pixels et de manière quasi régulière pour des zones contiguës.

De préférence selon l'invention, la procédé est tel que chaque zone est constituée par un pixel.

De préférence selon l'invention, le procédé est tel que chaque zone est constituée par un groupe de pixels contigus.

De préférence selon l'invention, les valeurs de paramètre déterminées sont les valeurs de zone.

De préférence selon l'invention, la valeur de zone est la valeur maximum des valeurs de pixels associés à la zone et/ou la valeur minimale des valeurs de pixels associés à la zone et/ou une valeur calculée à partir des valeurs de pixels associés à la zone.

Dans le cas d'une variante de réalisation, une seule valeur de paramètre déterminée a été affectée à chaque zone. Les images de paramètre telles que leur niveau de variation soit plus faible que celui des variations de l'image numérique sont ci-après dénommées les images à variation contrôlée. Dans le cas de cette variante de réalisation, de préférence selon l'invention, pour réduire les variations de l'image des paramètres déterminée et produire une image régularisée des paramètres ayant un niveau de variation plus faible que celui des variations de l'image numérique le procédé comprend en outre l'étape de sélectionner parmi les images à variation contrôlée une image des paramètres proche (au sens de la présente invention) de l'image des paramètres déterminée. On obtient ainsi une image des paramètres constituant l'image régularisée des paramètres.

Dans le cas d'une autre variante de réalisation, une seule valeur de paramètre déterminée est également affectée à chaque zone. Les images de paramètre telles que leur niveau de variation soit plus faible que celui des variations de l'image numérique sont ci-après dénommées les images à variation contrôlée. Dans le cas de cette autre variante de réalisation, de préférence selon l'invention, pour réduire les variations de l'image des paramètres déterminée et produire une image régularisée des paramètres ayant un niveau de variation plus faible que celui des variations de l'image numérique le procédé comprend en outre l'étape de sélectionner parmi les images à variation contrôlée une image des paramètres (c) (Zi.Vpi(c)) qui satisfait aux conditions suivantes :

* la valeur de paramètre déterminée (Vpij) de l'image des paramètres déterminée d'une zone (Zi) quelconque est, au moins pour plusieurs zones, inférieure ou égale à la valeur de paramètre (Vpi(c)) de l'image des paramètres (c) sélectionnée,
* la valeur de paramètre (Vpi(c)) de l'image des paramètres (c) sélectionnée d'une zone (Zi) est, au moins pour plusieurs zones, inférieure ou égale aux valeurs de paramètre (Vpi(q)) pour la plupart des images à variation contrôlée (q) (Zi.Vpi (q)) .

Il résulte de la combinaison de ces traits techniques qu'on obtient ainsi une image des paramètres constituant l'image régularisée des paramètres.

Dans le cas d'une autre variante de réalisation, une seule valeur de paramètre déterminée est affectée à chaque zone. Les images de paramètre telles que leur niveau de variation soit plus faible que celui des variations de l'image numérique sont ci-après dénommées les images à variation contrôlée. De préférence selon l'invention, dans le cas de cette variante de réalisation, pour réduire les variations de l'image des paramètres déterminée et produire une image régularisée des paramètres ayant un niveau de variation plus faible que celui des variations de l'image numérique le procédé comprend en outre l'étape de sélectionner parmi les images à variation contrôlée une image des paramètres (c) (Zi.Vpi(c)) qui satisfait aux conditions suivantes :

* la valeur de paramètre déterminée (Vpij) de l'image des paramètres déterminée d'une zone (Zi) quelconque est, au moins pour plusieurs zones, supérieure ou égale à la valeur de paramètre (Vpi(c)) de l'image des paramètres (c) sélectionnée,
* la valeur de paramètre (Vpi(c)) de l'image des paramètres (c) sélectionnée d'une zone (Zi) est, au moins pour plusieurs zones, supérieure ou égale aux valeurs de paramètre (Vpi(q)) pour la plupart des images à variation contrôlée (q) (Zi.Vpi(q)).

Il résulte de la combinaison des traits techniques qu'on obtient ainsi une image des paramètres constituant l'image régularisée des paramètres.

De préférence selon l'invention, pour régulariser l'image des paramètres déterminée en fonction de la variation de l'image numérique, le procédé met en oeuvre un algorithme comprenant l'étape de déterminer, pour une zone Zi définie, la valeur de paramètre Vpi(n+1) du couple (Zi.Vpi(n+1)) de la n+1-ieme image des paramètres en combinant :

* les valeurs des paramètres Vpj (n) et/ou Vpj (n+1) des couples de la n-ieme image et/ou de la n+1-ieme image dont les zones Zj sont situées dans le voisinage de la zone Zi, avec
* des valeurs correctives, fonctions des variations de l'image numérique entre la zone Zi et les zones Zj.

L'algorithme mis en oeuvre par le procédé comprend en outre l'étape d'itérer de proche en proche la précédente étape.

L'algorithme est initialisé en l'appliquant la première fois aux couples de l'image des paramètres déterminée.

De préférence selon l'invention, pour modifier les valeurs de pixel d'un pixel déterminé de l'image numérique le procédé comprend en outre les étapes suivantes :

- l'étape d'interpoler une valeur de paramètre relative au pixel déterminé à partir des valeurs de paramètre de l'image régularisée des paramètres, relatives aux zones voisines du pixel déterminé,
- l'étape de modifier la valeur du pixel déterminé en mettant en oeuvre la valeur de paramètre ainsi interpolée.

Dans le cas de la variante de réalisation où une seule valeur de paramètre déterminée a été affectée à chaque zone, de préférence selon l'invention, pour modifier les valeurs de pixel d'un pixel déterminé de l'image numérique le procédé comprend en outre les étapes suivantes :

- l'étape d'interpoler une valeur de paramètre relative au pixel déterminé à partir des valeurs de paramètre de l'image régularisée des paramètres, relatives aux zones voisines du pixel déterminé,
- l'étape de calculer un coefficient en appliquant une fonction prédéterminée, notamment le gamma, à la valeur de paramètre ainsi interpolée,
- l'étape de multiplier les valeurs de pixel du pixel déterminé par le coefficient ainsi calculé.

Dans le cas d'une autre variante de réalisation, deux valeurs de paramètre déterminées ont été affectées à chaque zone. Ces valeurs de paramètre déterminées sont ci-après dénommées la première valeur de paramètre et la deuxième valeur de paramètre. Dans le cas de variante de réalisation, de préférence selon l'invention, pour modifier les valeurs de pixel d'un pixel déterminé de l'image numérique le procédé comprend en outre les étapes suivantes :

- l'étape d'interpoler une première valeur de paramètre relative au pixel déterminé à partir des premières valeurs de paramètre de l'image régularisée des paramètres, relatives aux zones voisines du pixel déterminé,
- l'étape d'interpoler une deuxième valeur de paramètre relative au pixel déterminé à partir des deuxièmes valeurs de paramètre de l'image régularisée des paramètres, relatives aux zones voisines du pixel déterminé,
- l'étape de choisir une transformation affine en fonction la première valeur de paramètre et la deuxième valeur de paramètre ainsi interpolées,
- l'étape d'appliquer la transformation affine à chacune des valeurs de pixel.

De préférence selon l'invention, pour modifier les valeurs de pixel d'un pixel déterminé de l'image numérique le procédé comprend en outre les étapes suivantes :

- l'étape de calculer un coefficient en fonction des valeurs de paramètre de l'image régularisée des paramètres et des valeurs de pixel,
- l'étape de calculer chaque valeur de pixel du pixel déterminé en fonction du coefficient et des dites valeurs de pixel du pixel déterminé.

De préférence selon l'invention, pour modifier les valeurs de pixel d'un pixel déterminé de l'image numérique le procédé comprend en outre les étapes suivantes :

- l'étape de calculer un coefficient en fonction des valeurs de paramètre de l'image régularisée des paramètres et des valeurs de pixel,
- l'étape de multiplier chaque valeur de pixel du pixel déterminé par le coefficient ainsi calculé.

Dans le cas d'une variante de réalisation, le procédé est destiné à augmenter la luminosité des parties sombres de l'image numérique. Dans le cas de cette variante, le procédé est en outre plus particulièrement adapté pour préserver la luminosité des parties sombres et de faible étendue de l'image numérique. Dans le cas de cette variante de réalisation, de préférence selon l'invention, le procédé comprend en outre l'étape de calculer les valeurs de paramètres déterminées des zones des parties sombres et de faibles étendues, à partir des valeurs de paramètres déterminées des zones voisines, de sorte que l'écart entre les valeurs de paramètres déterminées pour les zones concernées soit faible.

Système

L'invention concerne également un système pour modifier une image numérique composée de pixels ayant des valeurs de pixels. De préférence selon l'invention, l'image numérique est décomposée en zones Zi. Chacun des pixels est associé à au moins une zone voisine. Au moins une valeur de zone est affectée à chacune des zones Zi. Au moins une valeur de paramètre Vpij est affectée à chacune des zones Zi. Un ensemble de couples (Zi.Vpij), composés d'une zone Zi et d'une valeur de paramètre Vpij associée à la zone Zi, constitue une image des paramètres. Le système comprend (a) un premier moyen de calcul permettant de déterminer des valeurs de paramètre déterminées Vpir, notamment en fonction des valeurs de zone de l'image numérique, pour chaque zone. L'image des paramètres ainsi constituée est ci-après dénommée l'image des paramètres déterminée.

Les valeurs de zone varient entre au moins une des zones et une zone contiguë. Cette variation est ci-après dénommée la variation de l'image numérique.

Les valeurs de paramètre déterminées varient entre la zone et au moins une zone contiguë. Cette variation est ci-après dénommée la variation de l'image des paramètres déterminée.

Le système comprend en outre (b) un deuxième moyen de calcul permettant de régulariser l'image des paramètres déterminée en fonction de la variation de l'image numérique, en réduisant les variations de l'image des paramètres déterminée pour produire une image des paramètres ayant un niveau de variation plus faible que celui des variations de l'image numérique. Cette image des paramètres est ci-après dénommée image régularisée des paramètres.

Le système comprend en outre (c) un troisième moyen de calcul permettant de modifier les valeurs de pixel d'un pixel déterminé de l'image numérique en fonction des valeurs de paramètre de l'image régularisée des paramètres, relatives aux zones voisines du pixel déterminé.

L'image numérique est ainsi modifiée de manière différenciée pour chacun des pixels et de manière quasi régulière pour des zones contiguës.

De préférence selon l'invention, le système est tel que chaque zone est constituée par un pixel.

De préférence selon l'invention, le système est tel que chaque zone est constituée par un groupe de pixels contigus.

De préférence selon l'invention, les valeurs de paramètre déterminées sont les valeurs de zone.

De préférence selon l'invention, la valeur de zone est la valeur maximum des valeurs de pixels associés à la zone et/ou la valeur minimale des valeurs de pixels associés à la zone et/ou une valeur calculée à partir des valeurs de pixels associés à la zone.

Dans le cas d'une variante de réalisation, une seule valeur de paramètre déterminée a été affectée à chaque zone. Les images de paramètre telles que leur niveau de variation soit plus faible que celui des variations de l'image numérique sont ci-après dénommées les images à variation contrôlée. Dans le cas de cette variante de réalisation, de préférence selon l'invention, pour réduire les variations de l'image des paramètres déterminée et produire une image régularisée des paramètres ayant un niveau de variation plus faible que celui des variations de l'image numérique le système comprend en outre des premiers moyens de sélection pour sélectionner parmi les images à variation contrôlée une image des paramètres proche (au sens de la présente invention) de l'image des paramètres déterminée. Il résulte de la combinaison des traits techniques qu'on obtient ainsi une image des paramètres constituant l'image régularisée des paramètres.

Dans le cas d'une autre variante de réalisation, une seule valeur de paramètre déterminée est également affectée à chaque zone. Les images de paramètre telles que leur niveau de variation soit plus faible que celui des variations de l'image numérique sont ci-après dénommées les images à variation contrôlée. Dans le cas de cette autre variante de réalisation, de préférence selon l'invention, pour réduire les variations de l'image des paramètres déterminée et produire une image régularisée des paramètres ayant un niveau de variation plus faible que celui des variations de l'image numérique le système comprend en outre des deuxièmes moyens de sélection. Ces deuxièmes moyens de sélection permettent de sélectionner parmi les images à variation contrôlée une image des paramètres (c) $(Z_i.V_{pi}(c))$ qui satisfait aux conditions suivantes :

- la valeur de paramètre déterminée $(V_{pij})$ de l'image des paramètres déterminée d'une zone $(Z_i)$ quelconque est, au moins pour plusieurs zones, inférieure ou égale à la valeur de paramètre $(V_{pi}(c))$ de l'image des paramètres (c) sélectionnée,
- la valeur de paramètre $(V_{pi}(c))$ de l'image des paramètres (c) sélectionnée d'une zone $(Z_i)$ est, au moins pour plusieurs zones, inférieure ou égale aux valeurs de paramètre $(V_{pi}(q))$ pour la plupart des images à variation contrôlée (q) $(Z_i.V_{pi}(q))$.

On obtient ainsi une image des paramètres constituant l'image régularisée des paramètres.

Dans le cas d'une autre variante de réalisation, une seule valeur de paramètre déterminée est affectée à chaque zone. Les images de paramètre telles que leur niveau de variation soit plus faible que celui des variations de l'image numérique sont ci-après dénommées les images à variation contrôlée. De préférence selon l'invention, dans le cas de cette variante de réalisation, pour réduire les variations de l'image des paramètres déterminée et produire une image régularisée des paramètres ayant un niveau de variation plus faible que celui des variations de l'image numérique le système comprend en outre des troisièmes moyens de sélection pour sélectionner parmi les images à variation contrôlée une image des paramètres (c) $(Z_i.V_{pi}(c))$ qui satisfait aux conditions suivantes :

- la valeur de paramètre déterminée $(V_{pij})$ de l'image des paramètres déterminée d'une zone $(Z_i)$ quelconque est, au moins pour plusieurs zones, supérieure ou égale à la valeur de paramètre $(V_{pi}(c))$ de l'image des paramètres (c) sélectionnée,
- la valeur de paramètre $(V_{pi}(c))$ de l'image des paramètres (c) sélectionnée d'une zone $(Z_i)$ est, au moins pour plusieurs zones, supérieure ou égale aux valeurs de paramètre $(V_{pi}(q))$ pour la plupart des images à variation contrôlée (q) $(Z_i.V_{pi}(q))$.

On obtient ainsi une image des paramètres constituant l'image régularisée des paramètres.

De préférence, selon l'invention, pour régulariser l'image des paramètres déterminée en fonction de la variation de l'image numérique, le système comporte un algorithme comprend l'étape de déterminer, pour une zone $Z_i$ définie, la valeur de paramètre $V_{pi}(n+1)$ du couple $(Z_i.V_{pi}(n+1))$ de la n+1-ieme image des paramètres en combinant :

- les valeurs des paramètres $V_{pj}(n)$ et/ou $V_{pj}(n+1)$ des couples de la n-ieme image et/ou de la n+1-ieme image dont les zones $Z_j$ sont situées dans le voisinage de la zone $Z_i$, avec
- des valeurs correctives, fonctions des variations de l'image numérique entre la zone $Z_i$ et les zones $Z_j$.

Cet algorithme comprend en outre l'étape d'itérer de proche en proche la précédente étape. L'algorithme est initialisé en l'appliquant la première fois aux couples de l'image des paramètres déterminée.

De préférence selon l'invention, le troisième moyen de calcul pour modifier les valeurs de pixel d'un pixel déterminé de l'image numérique exécute les opérations suivantes :

- l'opération d'interpoler une valeur de paramètre relative au pixel déterminé à partir des valeurs de paramètre de l'image régularisée des paramètres, relatives aux zones voisines du pixel déterminé,
- l'opération de modifier la valeur du pixel déterminé en mettant en oeuvre la valeur de paramètre ainsi interpolée.

Dans le cas de la variante de réalisation où une seule valeur de paramètre déterminée a été affectée à chaque zone, de préférence selon l'invention, pour modifier les valeurs de pixel d'un pixel déterminé de l'image numérique, le troisième moyen de calcul pour modifier les valeurs de pixel d'un pixel déterminé de l'image numérique exécute les opérations suivantes :

- l'opération d'interpoler une valeur de paramètre relative au pixel déterminé à partir des valeurs de paramètre de l'image régularisée des paramètres, relatives aux zones voisines du pixel déterminé,
- l'opération de calculer un coefficient en appliquant une fonction prédéterminée, notamment le gamma, à la valeur de paramètre ainsi interpolée,
- l'opération de multiplier les valeurs de pixel du pixel déterminé par le coefficient ainsi calculé.

Dans le cas d'une autre variante de réalisation, deux valeurs de paramètre déterminées ont été affectées à chaque zone. Ces valeurs de paramètre déterminées sont ci-après dénommées la première valeur de paramètre et la deuxième valeur de paramètre. Dans le cas de variante de réalisation, de préférence selon l'invention, le troisième moyen de calcul pour modifier les valeurs de pixel d'un pixel déterminé de l'image numérique exécute les opérations suivantes :

- l'opération consistant à interpoler une première valeur de paramètre relative au pixel déterminé à partir des premières valeurs de paramètre de l'image régularisée des paramètres, relatives aux zones voisines du pixel déterminé,
- l'opération consistant à interpoler une deuxième valeur de paramètre relative au pixel déterminé à partir des deuxièmes valeurs de paramètre de l'image régularisée des paramètres, relatives aux zones voisines du pixel déterminé,
- l'opération consistant à choisir une transformation affine en fonction la première valeur de paramètre et la deuxième valeur de paramètre ainsi interpolées,
- l'opération consistant à appliquer la transformation affine à chacune des valeurs de pixel.

De préférence selon l'invention, le troisième moyen de calcul pour modifier les valeurs de pixel d'un pixel déterminé de l'image numérique exécute les opérations suivantes :

- l'opération consistant à calculer un coefficient en fonction des valeurs de paramètre de l'image régularisée des paramètres et des valeurs de pixel,
- l'opération consistant à calculer chaque valeur de pixel du pixel déterminé en fonction du coefficient et des dites valeurs de pixel du pixel déterminé.

De préférence selon l'invention, le troisième moyen de calcul pour modifier les valeurs de pixel d'un pixel déterminé de l'image numérique exécute les opérations suivantes :

- l'opération consistant à calculer un coefficient en fonction des valeurs de paramètre de l'image régularisée des paramètres et des valeurs de pixel,
- l'opération consistant à multiplier chaque valeur de pixel du pixel déterminé par le coefficient ainsi calculé.

Dans le cas d'une variante de réalisation, le système est destiné à augmenter la luminosité des parties sombres de l'image numérique. Dans le cas de cette variante, le système est en outre plus particulièrement adapté pour préserver la luminosité des parties sombres et de faible étendue de l'image numérique. Dans le cas de cette variante de réalisation, de préférence selon l'invention, le système comprend en outre un quatrième moyen de calcul pour calculer les valeurs de paramètres déterminées des zones des parties sombres et de faibles étendues, à partir des valeurs de paramètres déterminées des zones voisines, de sorte que l'écart entre les valeurs de paramètres déterminées pour les zones concernées soit faible.

Description détaillée

D'autres caractéristiques et avantages de l'invention apparaîtront à la lecture de la description de variantes de réalisation de l'invention données à titre d'exemple indicatif et non limitatif, et de la

- figure 1 qui représente l'image numérique (100) composée de pixels (101) ayant des valeurs de pixels (102), l'image numérique étant décomposée en zones (103) ; chaque zone (103) ayant au moins une valeur de zone (104) ; chacun des pixels (101) étant associé (105) à une zone voisine,
- figure 2 qui représente de deux façons équivalentes, une image des paramètres (201) ou (202), formée de couples, chacun d'entre eux étant composé d'une zone (103) et d'une valeur de paramètre (203),
- figure 3 qui représente l'étape de détermination (301) des valeurs de paramètres déterminées (305), étape de détermination mise en oeuvre dans par le premier moyen de calcul (504) illustré dans la figure 5,
- figure 4a, qui représente un exemple de zones contiguës (403) et les variations de l'image numérique (401), la figure 4b qui représente les variations d'une image des paramètres (402), et la figure 4c qui représente des niveaux de variation de l'image numérique et d'une image des paramètres ainsi qu'une image des paramètres à variation contrôlée (414),

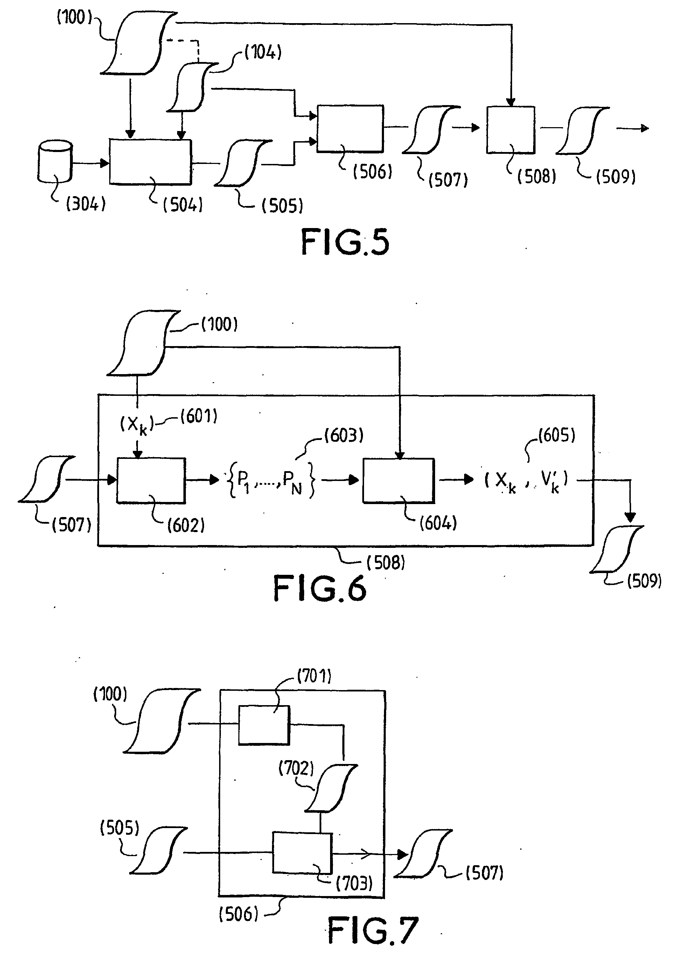

- figure 5, qui représente une variante de mise en oeuvre du procédé et système ; avec notamment l'image des paramètres déterminée (505), l'image régularisée des paramètres (507). Sont représentés dans cette figure, l'étape de détermination (504) de l'image des paramètres déterminée (505) par le premier moyen de calcul (504), l'étape de régularisation (506) de l'image des paramètres déterminées (505) en l'image régularisée des paramètres (507) par le deuxième moyen de calcul (506), l'étape de modification (508) de l'image numérique (100) en fonction de l'image régularisée des paramètres (507) par le troisième moyen de calcul (508),
- figure 6, qui représente une variante de mise en oeuvre de l'étape de modification (508) des valeurs de pixels de l'image numérique (100) en fonction de valeurs de paramètre relative audit pixel (603), cette variante mettant en oeuvre l'opération d'interpoler (602),
- figure 7, qui représente une variante de mise en oeuvre de l'étape de régularisation (506) de l'image des paramètres déterminée (505) en l'image régularisée des paramètres (507), variante mettant en oeuvre des moyens de sélection (703).
- figure 8, qui représente une seconde variante de mise en oeuvre de l'étape de régularisation (506) mettant en oeuvre un processus itératif,
- figure 9, qui représente une variante de mise en oeuvre de l'étape de détermination (504) (par le premier moyen de calcul (504)) de l'image des paramètres déterminée (505), variante mettant en oeuvre, en outre, un quatrième moyen de calcul (902),
- figure 10, qui illustre, selon une variante de mise en oeuvre du procédé, le contenu (1001) d'une image numérique (100) avec en particulier des parties sombres (1002), le contenu (1005) de l'image des paramètres déterminée (505), le contenu (1006) de l'image régularisée des paramètres (507), et le contenu (1007) image numérique modifiée (509), selon le procédé, de manière différenciée et quasi régulière par pixel,
- figure 11, qui représente une variante de mise en oeuvre de l'étape de modification (508) de l'image numérique (100), modification mettant en oeuvre, pour chaque pixel, un coefficient (1104).
- figure 12, qui représente une variante de mise en oeuvre de l'étape de modification (508) de l'image numérique (100), modification mettant en oeuvre, pour chaque pixel, deux valeurs de paramètres (1203) une transformation affine (1204).

Avant de décrire les figures représentées on va maintenant préciser les définitions de certaines notions utilisées dans la description et les revendications.

**Image numérique (100), pixels (101), valeurs de pixels (102)**

Avant de décrire plus en détail des modes de réalisation de l'invention, on rappelle qu'une image numérique (100) est constituée de pixels (101), chaque pixel désignant une position et une portion de l'espace image, chaque pixel ayant au moins une valeur de pixels (102). Les images issues d'appareils photographiques, dites images photographiques, sont des images de dimension 2, au sens ou l'espace image est une portion rectangulaire d'un plan. Mais, des images, notamment issues d'observations physiques ou médicales, peuvent être de dimensions supérieures notamment 3. De même, une vidéo issue par exemple d'un caméscope, pourra être considérée comme une succession d'images de dimension 2 ou comme une seule image de dimension 3 : les deux premières dimensions étant, dans ce cas, les dimensions des images et la troisième représentant le numéro de l'image dans la vidéo.

**Canaux**

Une image peut être décomposée de diverses façons en canaux, à un pixel de l'image correspondant alors une valeur de pixel (102) pour chacun des canaux.

Dans le cas particulier des images couleurs, la décomposition en canaux, de tels canaux étant alors dénommées canaux couleur, peut notamment se faire en utilisant une décomposition dans les espaces couleurs RGB, sRGB, LMS, Lab, Yuv, HSL, HSV, XYZ, xyz. Ces termes, à l'exception de sRGB, sont définis par exemple dans l'ouvrage suivant : "Measuring Color", Third Edition, R.W.D. Hunt, Fountain Press, Kingston-upon-Thames, England 1998, ISBN 0863433871 ou dans l'ouvrage "Color Appearance Models", M. Fairchild, Addison Wesley, 1998, ISBN 0201634643. L'espace couleur sRGB est décrit dans la norme IEC 61966-2-1 "Multimedia systems and equipment - Colour measurement and management - Part 2-1: Colour management - Default RGB colour space & sRGB".

Dans le cadre de l'invention, l'image numérique pourra aussi être constituée d'un ou plusieurs canaux relatifs à d'autres données sans rapport avec la couleur ; comme par exemple des valeurs numériques relatives à des grandeurs physiques (notamment des altitudes, des distances, des températures).

**Luminance**

Dans des cas particuliers de mise en oeuvre de l'invention, plus particulièrement adaptés à la modification d'images photographiques numérisées, on pourra utiliser la notion de luminance. Il existe de nombreuses façons de définir la luminance :

- dans le cas d'images monochromatiques, la luminance peut être définie comme la valeur de pixel elle-même où une valeur fonction de la valeur de pixel.
- dans le cas d'images couleurs, la luminance peut être définie comme une combinaison arithmétique des valeurs de pixels. Par exemple, la luminance peut être définie comme la valeur de L, dans l'espace couleur Lab, la valeur de Y dans l'espace couleur Yuv, la valeur de V dans l'espace couleur HSV, la valeur maximale entre les trois canaux RGB dans l'espace couleur RGB, etc...

**Portion d' image numérique**

Dans le cadre de l'invention on appelle portion d'une image numérique I, une image numérique formée d'un sous ensemble de pixels, contiguës deux à deux, de l'image numérique I. Toute portion d'image numérique étant elle-même une image numérique, tout algorithme, opérateur mathématique, procédé, système agissant sur une image numérique quelconque pourra de façon naturelle agir sur toute portion de l'image numérique elle-même.

**Filtre**

Dans la suite, il pourra être fait référence à des filtres classiques appliqués à une image numérique. Par filtre nous entendons un procédé de modification d'une image numérique affectant les valeurs de pixels de chaque pixel en fonction des valeurs de pixels dudit pixel et de ces voisins. Voici une liste de quelques filtres classiques :

- le filtre convolution, en particulier la convolution par un noyau positif appelé filtre moyenneur,
- le filtre median,
- les filtres d'érosion, de dilatation, de fermeture et d'ouverture s'appuyant sur des éléments structurants ou fonctions structurantes prédéfinies,
- les filtres d'ordres et en particulier les filtres sup-inf,
- les filtres non linéaires monotones avec en particulier les diffusions non linéaires.

On pourra trouver une définition précise de tels filtres notamment dans les ouvrages suivants : « Image Analysis and Mathematical Morphology », Jean Serra , Academic Press, 1982, rev. 1988. , « Analyse d'images : filtrage et segmentation », J-P. Cocquerez et S. Philipp, Masson 1995, ISBN 2-225-84923-4 , « Anisotropic Diffusion in Image Processing », J. Weickert, ECMI Séries, Teubner-Verlag, 1998, ISBN 3-519-02606-6.

**Algorithme de modification globale d'une image numérique**

Dans la suite, il pourra être fait référence à un algorithme (ou moyens de calculs) de modification globale de l'image numérique. Nous désignons par algorithme de modification globale de l'image numérique tout algorithme comportant deux étapes : une d'estimation globale et une de modification globale de l'image numérique ; les deux étapes étant telles que :

- l'estimation globale s'effectue à partir de tout ou partie des valeurs de pixel des pixels de l'image numérique et génère des valeurs de paramètres globaux propre à l'algorithme. L'estimation globale peut être effectuée soit par un algorithme automatique, soit manuellement par un utilisateur,

- la modification globale de l'image numérique affecte les valeurs de pixels de chaque pixel de l'image numérique, en fonction :

- des valeurs de pixels dudit pixel,
- desdites valeurs de paramètres globaux propre à l'algorithme et éventuellement
- des valeurs de pixel des pixels voisins dudit pixel.

Des exemples d'algorithmes de modification globale d'images numériques sont par exemple :

- l'algorithme dit des niveaux, s'appliquant notamment à une image d'un seul canal, consistant à modifier les valeurs de pixel de l'image numérique de telle sorte à utiliser toute la dynamique possible. L'étape d'estimation globale estime deux valeurs numériques Vm et VM, par exemple égales respectivement à la valeur minimale et à la valeur maximale des valeurs de pixels. Vm et VM correspondent alors à deux paramètres globaux. L'étape de modification de l'image numérique procède alors comme suit : les deux valeurs numérique Vm et VM définissent une unique application affine transformant la première en valeur minimale de la dynamique (typiquement 0) et la deuxième en la valeur maximale de la dynamique (typiquement 255). Les valeurs de pixels de l'image numérique sont alors modifiées par l'application affine ainsi définie.
- un algorithme de déflouage global de l'image comportant deux étapes :

  + une étape d'estimation d'un niveau moyen de flou de l'image numérique à partir des valeurs de pixels. L'algorithme a alors un paramètre global et une valeur de paramètre global : respectivement le flou et le niveau moyen du flou
  + et, une étape de modification des valeurs de pixels consistant à remplacer, les valeurs numériques de chaque pixel.par une combinaison des valeurs numériques des pixels voisins. La combinaison étant uniquement déterminée en fonction de la valeur de paramètre global précédemment estimée (le niveau moyen du flou) .

A noter qu'un algorithme de déflouage global de l'image peut comporter bien d'autres paramètres que le seul niveau moyen de flou, comme par exemple le niveau moyen de bruit présent dans l'image numérique. Dans ce cas, la combinaison utilisée dans l'étape de modification des valeurs de pixels dépend à la fois du niveau moyen de flou mais aussi du niveau moyen de bruit.

- un algorithme de changement de balance des blancs, s'appliquant plus particulièrement à une image couleur, comportant une étape d'estimation de la couleur de l'illuminant principal de la scène représentée par l'image couleur, et une étape de modification des valeurs de pixels fonction de l'illuminant principal consistant par exemple changer les valeurs de pixels de telle sorte que la couleur relative à l'illuminant principal atteigne une couleur prédéterminée. De tels algorithmes sont avantageusement utilisés pour réduire l'aspect jaunâtre des images intérieures, ou bleuâtre des images extérieures prises à l'ombre.

La caractéristique principale d'un algorithme de modification globale de l'image numérique est de modifier les pixels de l'image numérique avec les mêmes valeurs de paramètres globaux propre à l'algorithme. Or, il peut être avantageux de modifier les pixels de l'image numérique avec des valeurs de paramètres différents par exemple selon la position du pixel dans l'image ou selon le voisinage du pixel.

Pour reprendre chacun des exemples mentionnés ci-dessus:

Il pourra être avantageux d'utiliser différemment l'algorithme des niveaux selon la partie de l'image afin, par exemple, d'éclaircir les parties sombres ou d'assombrir les parties claires, de manière adaptée à chaque zone de l'image numérique.

Il pourra être aussi avantageux d'utiliser différemment l'algorithme de déflouage global selon la partie de l'image pour déflouer plus une partie très flou et moins une partie moins flou ou très bruitée de l'image numérique.

Il pourra être aussi avantageux d'utiliser différemment l'algorithme global de changement de balance des blancs par exemple pour des images de scènes ayant été éclairées par différents illuminants : réduire l'effet flash pour les parties de la scène principalement éclairées par un flash, et réduire l'effet jaunâtre pour les parties de la scène éclairée par une lampe jaunâtre, etc...

**Zone (103)**

Dans le cadre de l'invention, une zone (103) peut être définie de diverses manières ou sous diverses formes, notamment :

un pixel, ou,

un sous ensemble de l'espace image, indépendant du contenu de l'image numérique, notamment une zone rectangulaire, comme par exemple des rectangles ou carrés délimités par 3x3 ou 7x7 pixels, ou,

un sous ensemble de l'espace image déterminée en fonction du contenu de l'image, par exemple des zones connexes de pixels ayant des valeurs de pixels proches ou dans une plage de valeurs.

### Décomposition de l'image numérique (100) en zones (103)

La décomposition de l'image numérique (100) en zones (103) peut se faire de diverses manières selon l'invention :

elle peut s'effectuer en pixel, chaque pixel de l'image définissant une zone,

elle peut s'effectuer en une partition géométrique prédéterminée de l'espace image en regroupant en zone des ensembles de pixels de l'image numérique, chaque zone étant ainsi un ensemble de pixels. Un cas particulier d'implémentation pour des images bidimensionnelles, consiste à choisir une partition de l'ensemble des pixels en zones formées, par exemple, de X par Y pixels,

elle peut aussi s'effectuer en une partition géométrique quelconques mais prédéterminée de l'espace image. Un cas particulier d'implémentation pour des images bidimensionnelles, consiste alors à effectuer un découpage régulier de l'espace image,

elle peut s'effectuer en une partition de l'espace image, calculée en fonction des valeurs de pixels ; notamment en regroupant en zone des pixels ayant des valeurs proches. Dans le cas particulier des images couleurs, une telle partition pourra permettre de regrouper en zone des pixels correspondant aux teintes chairs ou correspondant à des parties claires ou sombres.

### Zone voisine / pixel voisin (105)

Les zones (103), au sens de l'invention, correspondent à des sous ensembles de l'espace image de l'image numérique (100). A chaque pixel (101), on pourra donc naturellement associer une ou plusieurs zones voisines (105) parmi les zones (103) qui contiennent ou qui sont proches de la position dudit pixel. De la même façon, à chaque zone on pourra naturellement considérer ses pixels voisins.

### Valeur de zone (104)

Dans le cadre de l'invention, au moins une valeur de zone (104) est affectée à chaque zone (103)-. Dans le cas où la zone (103) est un pixel (101), elle pourra être une des valeurs de pixels (102) dudit pixel (101), ou toute combinaison prédéterminée des valeurs de pixels (102) dudit pixel (101). Dans le cas spécifique d'une image couleur, par exemple, la valeur de zone pourra être la luminance ou la valeur du canal couleur vert ou la valeur la plus grande parmi les valeurs de pixels associées à chaque canal.

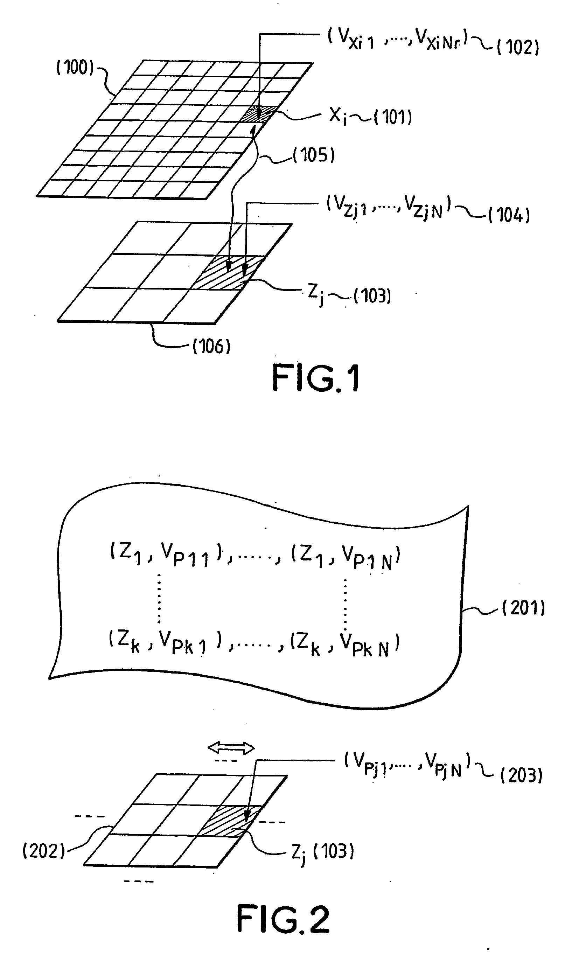

La figure 1 présente une image numérique (100) dans le cas particulier d'une image 2D. L'image numérique (100) est composée de pixels xi (101), chaque pixel ayant des valeurs de pixels (Vxi1, ..., VxiN) (102). L'image numérique (100) est décomposée en zones (103), au moins une valeur de zone (104) étant affectée à chaque zone (103). Chacun des pixels (101) est associé (105) à une zone (103). La double flèche (105) illustre l'association entre le pixel Xi et la zone Zj. La zone Zj est dans ce cas particulier dite zone voisine (105) au pixel Xi. En (106) est représenté un ensemble de zones (103), voisines à la zone Zj.

### Valeur de paramètre (203)

Selon l'invention, on affecte au moins une valeur de paramètre (203) à chaque zone (103). Une valeur de paramètre est typiquement une valeur numérique ou une donnée qui pourra se ramener à une valeur numérique.

### Paramètre

Selon une variante de l'invention, les valeurs de paramètre peuvent être rattachées à la notion de paramètre. On pourra, par exemple, considérer deux paramètres et affecter à chaque zone, deux valeurs de paramètre, l'une relative au premier paramètre, l'autre relative au deuxième paramètre. Cette variante sera avantageusement utilisée, dans le cas où le procédé ou système est utilisé afin de localiser un algorithme de modification globale d'une image numérique, ayant au moins un paramètre global. Dans un tel cas, pour chaque zone on pourra affecter une valeur de paramètre relative à chacun des paramètres globaux.

**Image des paramètres**

Dans le cadre de l'invention on appelle image des paramètres (201) ou (202) tout ensemble de couples formés d'une zone et d'une valeur de paramètre.

La figure 2 présente une image des paramètres (201), formés de couples (zone Zi, valeur de paramètre affecté à la zone Vpik). L'image des paramètres (201) peut naturellement être représentée d'un façon similaire à une image numérique comme montré en (202) : à chaque zone Zi (103) est associée les valeurs de paramètres (Vpi1, ..., VpiN) (203) affectées à la zone Zi. (103). Dans la suite de la description une image de paramètres pourra être référencée comme (201) ou (202).

**Valeur de paramètre déterminée (305)**

Dans le cadre de l'invention on détermine pour chaque zone (103) au moins une valeur de paramètre déterminée (305). Une valeur de paramètre déterminée (305) est une valeur particulière de paramètre (203).

Chaque valeur de paramètre déterminée (305) peut être déterminée comme égale à une valeur prédéterminée (c'est à dire indépendante des valeurs de pixels de l'image numérique). Cela pourra être par exemple une valeur numérique d'autant plus grande que la zone, à laquelle elle est associée, est proche du bord de l'image ; afin de permettre une modification différenciée des valeurs de pixels entre les pixels proches ou loin du bord de l'image numérique.

Chaque valeur de paramètre déterminée (305) affectée à une zone (103), peut aussi être déterminée en calculant une combinaison arithmétique

des valeurs de zones, des zones situées dans un voisinage de la zone considérée,

des valeurs de pixels, des pixels voisins à la zone considérée,

de données extérieures au procédé ou système.

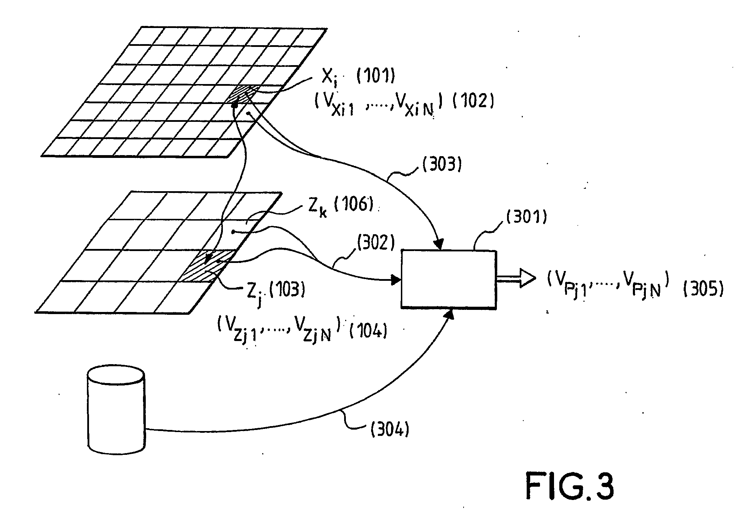

La figure 3 présente un exemple de mise en oeuvre de la détermination (301) des valeurs de paramètres déterminées Vpj1, ..., VpjN (305) d'une zone Zj (103), en fonction des valeurs de zones (104) de la zone Zi (103) et des zones voisines (106) à zone Zi (103) et/ou en fonction aussi des valeurs de pixels (102) de pixels voisins à la zone Zi (103) et/ou de données extérieures au procédé ou système (304).

Dans le cas où le procédé ou système est utilisé afin de localiser un algorithme de modification globale ayant N paramètres globaux, on prévoit, pour déterminer les valeurs de paramètres déterminées, par exemple, les étapes suivantes pour chaque zone:

- on applique, l'étape d'estimation globale des paramètres globaux à une portion de l'image numérique, portion formée des pixels situés à proximité de ladite zone ;
- on affecte à ladite zone comme valeurs de paramètres, les valeurs des N paramètres globaux déterminées lors de la précédente étape.

Par exemple, dans un cas particulier de réalisation, localisant, l'algorithme de modification globale de l'image dit des niveaux, on affectera à chaque zone comme valeurs de paramètres, la valeur du niveau minimum et la valeur du niveau maximum des valeurs de zone.

Par exemple aussi, dans un cas particulier de réalisation localisant l'algorithme de déflouage global, on affectera à chaque zone comme valeur de paramètres un niveau moyen de flou estimé à partir des valeurs de pixels des pixels situés dans un voisinage de la zone.

Par exemple enfin, les valeurs de paramètre déterminées peuvent être choisies comme les valeurs de zone.

Le système objet de l'invention prévoit donc un premier moyen de calcul (504), qui sera représenté sur la figure 5, permettant de déterminer (301) des valeurs de paramètre déterminées (305), notamment en fonction des valeurs de zone de ladite image numérique (104), pour chaque zone (103) ; et ce afin de déterminer l'image des paramètres déterminée (505). Ce premier de calcul (504) peut se référer à n'importe quelle variantes de mise en oeuvre comme celles décrites ci-dessus.

**Couple (Zi, Vpij)**

Pour chaque zone Zi (103) et chaque valeur de paramètre Vpij (203) lui étant associée, on pourra considérer le couple (Zi, Vpij).

Une ou plusieurs valeurs de paramètres peuvent être associées à chaque zone. Avantageusement, dans une variante de réalisation, on aura choisi préalablement un nombre fixe de paramètres P et on associera à chaque zone, pour chaque paramètre, une valeur de paramètre qui sera dite relative audit paramètre. Ainsi, pour chaque zone Zi, on pourra considérer les P couples (Zi, Vpi1), ..., (Zi, VpiP). Vpi1 est la valeur de paramètre de la zone Zi, relative au premier paramètre. Vpi2 est la valeur de paramètre de la zone Zi, relative au deuxième paramètre, etc...

**Image des paramètres déterminée (505)**

Selon l'invention, l'image des paramètres déterminée (505) est une image des paramètres (202), où les couples sont formés d'une zone (103) et d'une ou plusieurs valeur(s) de paramètre déterminée (305), pour cette zone (103).

Selon l'invention, une ou plusieurs image(s) des paramètres déterminée(s) peuvent être constituées.

Dans une variante de réalisation où les valeurs de paramètres sont relatives à un choix préétabli de P paramètres, numérotés de 1 à P, on pourra considérer plusieurs images des paramètres déterminée, notamment une pour chaque paramètre. Chaque image des paramètre déterminées étant constituée du sous-ensemble des couples formés avec les valeurs de paramètres relatives à un des paramètres. La j-ieme image des paramètres déterminée étant donc par exemple constituées des couples : (ZO, VpOj), ..., (ZN,VpNj). On pourra aussi, ne considérer qu'une seule image des paramètres, constituées alors de P plans ou canaux, les couples du j-ieme plan ou canal, étant les couples (Z0, Vp0j), ..., (ZN, VpNj).

L'image des paramètres déterminée (505) étant une image des paramètres l'une quelconque des représentations d'image des paramètres (201) ou (202) s'applique naturellement à l'image des paramètres déterminée (505),

**Variation des valeurs de zones**

Les valeurs de zone (104) étant des valeurs numériques, la variation entre deux valeurs de zones (103) peut être naturellement définie comme une distance mathématique entre ces deux valeurs numériques.

Dans le cas particulier où une seule valeur de zone (104) est affectée à chaque zone (103), la variation entre deux zones (103) pourra être par exemple : l'amplitude de la différence entre les valeurs de zones des deux zones. De façon plus générale, toute fonction de cette différence pourra être utilisée comme définition à la variation.

Lorsque plusieurs valeurs de zones sont affectées à chaque zone, on pourra définir la variation entre deux zones comme par exemples :

une seule valeur numérique comme notamment la somme des amplitudes des différences entre les valeurs de zones des deux zones, ou la différence de plus grande parmi les différences entre les valeurs de zones des deux zones,

un vecteur formé de plusieurs valeurs numériques comme notamment le vecteur formé de chaque différence ou amplitude de différence entre les valeurs de zones des deux zones.

**Variation de l'image numérique (401)**

Dans le cadre de l'invention, la variation de l'image numérique (401) fait référence à tout ou partie de l'ensemble des variations entre zones contiguës (403) de l'image numérique (100).

Au sens de l'invention, deux zones sont dites contiguës (403) si elles correspondent à deux sous-ensembles de l'image numérique jointifs entre eux. Plus généralement, on pourra considérer que deux zones sont contiguës si une distance mathématique entre les deux sous-ensembles de l'image numérique correspondants est plus petite qu'un seuil déterminé.

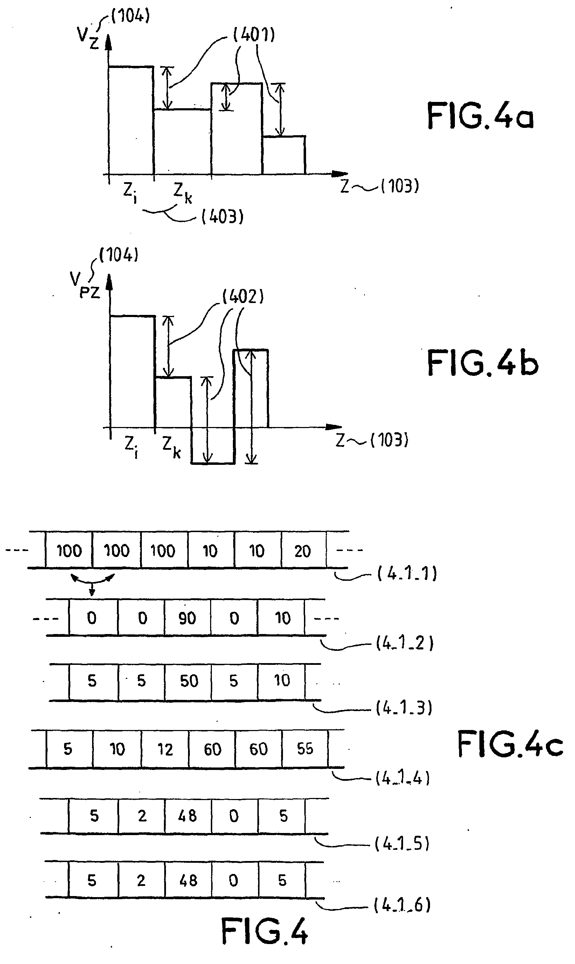

La figure 4a, illustre la variation de l'image numérique (401), pour une variante d'implémentation du procédé ou système, dans le cas d'une image numérique (100) de dimension 1 et dans le cas où une seule valeur de zone (104) est affectée à chaque zone (103). L'espace image et les zones (103) de l'image numérique (100) sont représentés horizontalement. Les valeurs de zones (104) sont représentées verticalement. Zi et Zk représentent un exemple de deux zones contiguës (403). Les flèches relatives au variation entre valeurs de zone de zones contiguës (403) représentent la variation de l'image numérique (401).

**Variation des valeurs de paramètres**

Les valeurs de paramètres (203) étant des valeurs numériques ou des valeurs pouvant être ramenées à des valeurs numériques, la variation entre deux valeurs de paramètres peut être naturellement définie comme une distance mathématique entre les valeurs numériques.

Dans le cas particulier où une seule valeur de paramètre est affectée à chaque zone, la variation entre deux zones contiguës pourra être par exemple l'amplitude de la différence entre la valeurs de paramètres des deux zones. De façon plus générale toute fonction de cette différence pourra être utilisée comme définition à la variation.

La figure 4.b illustre la variation de l'image des paramètres déterminée (505), pour une variante d'implémentation du procédé ou système, dans le cas d'une image numérique (100) de dimension 1 et dans le cas où une seule valeur de paramètre déterminée (305) est affectée à chaque zone (103). L'espace image et les zones (103) de l'image numérique (100) sont représentés horizontalement. Les valeurs de paramètre déterminée (305) sont représentées verticalement.

Les flèches illustrent la variation de l'image des paramètres déterminée (402).

Lorsque plusieurs valeurs de paramètres sont affectées à chaque zone, on pourra par exemple définir la variation des valeurs de paramètres entre les deux zones la somme des amplitudes des différences entre les valeurs de paramètres des deux zones.

Dans le cas particulier, où les valeurs de paramètres sont relatives à des paramètres. On pourra définir la variation des valeurs de paramètres comme une fonction relative aux différences entre valeurs de paramètres relatives à un même paramètre ; de telle sorte à ne comparer que des valeurs de paramètres d'un même type.

Dans le cas particulier où le procédé ou système est utilisé afin de localiser un algorithme de modification globale de l'image numérique ayant au moins un paramètre : on pourra définir la variation des valeurs de paramètres comme une fonction relative à l'écart d'effet qu'ils engendrent lors de la modification globale de l'image numérique. Par exemple, dans le cas particulier de l'algorithme dit des niveaux, et pour des valeurs de paramètres associées respectivement au paramètre de niveau minimal et au paramètre de niveau maximal, on pourra définir la variation de paramètres entre deux zones, comme la valeur absolue de la différence de la moyenne de ces deux valeurs de paramètres entre les deux zones.

**Variation d'une image de paramètres et en particulier de l'image des paramètres déterminée (402)**

Dans le cadre de l'invention, la variation d'une image des paramètres (402), et en particulier l'image des paramètres déterminée, fait référence à tout ou partie de l'ensemble des variations des valeurs de paramètres (203) (ou (305)) entre zones contiguës (403).

**Niveau de variation**

Dans le cadre de l'invention, nous comparons la variation de l'image numérique (401) à celle d'une image des paramètres (402). Or, selon des variantes de l'invention, les variations de l'image numérique et les variations de l'image des paramètres pourraient être exprimées en des unités différentes. Afin de pouvoir comparer ces deux types de variations nous faisons référence à un niveau de variation associé à chacun des deux types de variation.

Le niveau de variation d'une image numérique ou d'une image des paramètres déterminée pourra être la variation elle même, son amplitude ou plus généralement une fonction de la variation permettant une comparaison entre les deux types de niveaux de variations.

**Niveau de variation plus faible**

On dira que le niveau de variation d'une image des paramètres est plus petit que le niveau de variation de l'image numérique par exemples si :

pour chaque couple de zones contiguës, le niveau de variation de l'image de paramètres entre les deux zones est plus petit que le niveau de variation de l'image numérique entre les deux zones.

Pour une majorité ou un pourcentage prédéfini de couple zones contiguës, le niveau de variation de l'image de paramètres entre les deux zones est plus petit que le niveau de variation de l'image numérique entre les deux zones.

La moyenne des niveaux de variation de l'image des paramètres est plus petite que la moyenne des niveaux de variation de l'image numérique .

Plus généralement, le niveau de variation de l'image des paramètres formant un ensemble formé de valeurs numériques et le niveau de variation de l'image numérique formant un même ensemble formé d'autres valeurs numériques, la comparaison entre les niveaux de variation de l'image des paramètres et l'image numériques peut se définir à partir de n'importe qu'elle relation d'ordre mathématique portant sur ces ensembles.

La figure 4c représente un exemple de la variation d'une image numérique, pour une variante d'implémentation du procédé ou système, dans le cas d'une image numérique (100) de dimension 1 et dans le cas où une seule valeur de zone (104) est affectée à chaque zone (103) . L'espace image est représenté horizontalement où sont représentés une partie des zones (103) de l'image numérique (100) sous la forme de pavés. Les valeurs de zones (104) sont notées à l'intérieur des pavé (4-1-1). Un exemple de la variation de l'image numérique (401) est représentée en (4-1-2) sous la forme de valeurs numériques égales à l'amplitude entre les valeurs de zones des zones contiguës. Le niveau de variation de l'image numérique est représenté en (4-1-3), il est calculé, dans ce cas particulier, pour chaque couple de zones contiguës, comme la valeur 5 plus la moitié de la valeur de variation entre les zones contiguës. Une image de paramètres est représentée en (4-1-4). La variation de l'image des paramètres est représentée en (4-1-5) et le niveau de variation est représenté en (4-1-6). On a choisi, dans ce cas particulier, le niveau de variation d'une image des paramètres comme égal à sa variation. Pour chaque couple de zones contiguës, le niveau de variation de l'image de paramètres est plus petit que le niveau de variation de l'image numérique. Le niveau de variation de l'image de paramètres (4-1-6) est plus petit que le niveau de variation de l'image numérique (4-1-3).

### Image régularisée des paramètres (507)

Dans le cadre de l'invention, l'image régularisée des paramètres (507) est une image des paramètres (201) présentant un niveau de variation (4-1-6) plus faible que le niveau de variation de l'image numérique (4-1-3).

### Valeur de paramètre régularisée

Dans le cadre de l'invention, toute valeur de paramètre de l'image régularisée des paramètres sera appelée valeur de paramètre régularisée. De la même façon que dans une variante de réalisation de l'invention, chaque valeur de paramètre peut être relative à un paramètre, les valeurs de paramètre régularisées peuvent être aussi chacune relative à un paramètre.

### Procède et/ou Système Général

La figure 5 illustre un exemple de mise en oeuvre du procédé et système objet de l'invention. A partir de l'image numérique (100), des valeurs de zone (104), et éventuellement des données extérieures au procédé ou système (304) est déterminée, avec un premier moyen de calcul (504), une images des paramètres déterminée (505). L'image des paramètres déterminée (505) est régularisée, avec un deuxième moyen de calcul (506), en une image régularisée des paramètres (507). L'image numérique (100) est alors modifiée (508), avec un troisième moyen de calcul (508) en fonction de l'image régularisée des paramètres (507) pour obtenir ainsi une image numérique modifiée (509), où les modifications sont différenciées et quasi-régulière par pixel.

Dans la suite de la description, afin de simplifier la rédaction en évitant des répétitions, nous assimilerons l' « étape de détermination » de l'image des paramètres déterminés et le premier moyen de calcul (504) qui permet de réaliser cette étape de détermination. De même, nous assimilerons aussi l' « étape de régularisation » de l'image des paramètres déterminés en l'image régularisée des paramètres et le deuxième moyen de calcul (506) qui permet de réaliser cette étape de régularisation. Enfin, nous assimilerons l' « étape de modification » de l'image numérique et le troisième moyen de calcul (508) qui permet de réaliser cette étape de modification.

L'image régularisée des paramètres (507) est construite à partir de l'image des paramètres déterminée (505) par une étape de régularisation (506) ayant pour effet de réduire les variations (402) de l'image des paramètres déterminée (505) pour tout ou partie des zones contiguës (403) où ces variations sont plus grandes que les variations (401) de l'image numérique (100) entre ces zones. Plusieurs mises en oeuvres de l'étape de régularisation (506) seront présentées ci-après.

### Etape de Modification (508)

Selon l'invention, les valeurs de pixels des pixels de l'image numérique sont modifiées (508) en fonction des valeurs de paramètres de l'image régularisée des paramètres (507), valeurs de paramètres relatives aux zones voisines dudit pixel.

Selon une variante de mise en oeuvre, plus particulièrement adaptée à la localisation un algorithme de modification globale ayant au moins un paramètre global, les valeurs de pixel seront avantageusement modifiées en appliquant, pour chaque pixel, l'étape de modification globale de l'algorithme de modification globale de l'image numérique audit pixel, avec comme valeurs de paramètres pour chaque paramètre global, par exemple :

la valeur de paramètres régularisée, relative audit paramètre global, d'une zone voisine audit pixel
une combinaison prédéterminée des valeurs de paramètres régularisées, relatives audit paramètre global d'au moins une zone voisine dudit pixel et d'autres zones, comme par exemple tout ou partie des zones contiguës à une zone voisine audit pixel.

Ces valeurs pouvant varier d'un pixel à l'autre mais de façon contrôlée, on obtient alors une modification de l'image numérique non plus globale, mais une modification différenciée et quasi-régulière par pixel.

### Variante Etape de Modification (Valeur locale de paramètre)

Dans une variante de l'invention, on calculera pour chaque pixel (101) de l'image numérique (100) une ou plusieurs valeur(s) de paramètre relative audit pixel (603), à partir des valeurs de paramètre (203) de ladite image régularisée des paramètres (507), relatives aux zones voisines (105) dudit pixel déterminé. Par la suite nous désignerons par valeur locale de paramètre (603) toute valeur de paramètre relative à un pixel (603) .

La figure 6 illustre une telle variante de réalisation : elle concerne une mise en oeuvre particulière de l'étape de modification de l'image numérique ou troisième moyen de calcul (508). Pour chaque pixel xk (101) de l'image numérique (100), sont calculées les N valeurs de paramètres relatives au pixel xk (101) (valeurs locales de paramètres) (P1, ..., Pn) (603), à partir des valeurs de paramètres de l'image régularisée des paramètres (507), relatives aux zones voisines du pixel xk (101). La valeur Vk du pixel xk de l'image numérique est alors modifié en une valeur modifiée V'k (605), en mettant en oeuvre une opération (604), fonction notamment des valeurs locales de paramètres (P1, ..., Pn) (603). Une fois chaque pixel de l'image numérique traité, on obtient alors l'image numérique modifiée (509).

L'opération (602) de calculer ou d'interpoler, pour chaque pixel, des valeurs locales de paramètre peut s'effectuer de différentes façons selon notamment le choix des zones de l'image numérique.

Par exemple, dans le cas où chaque pixel définit une zone, les valeurs locales de paramètre de chaque pixel pourront être les valeurs de paramètres régularisées de la zone locale associée.

Par exemple encore, dans le cas où les zones forment une partition régulière de l'image numérique, pour un pixel déterminé, les valeurs locales de paramètres pourront être interpolées à partir des valeurs de paramètre de ladite image régularisée des paramètres, relatives aux zones voisines dudit pixel déterminé. Dans le cas particulier, où les zones forment une partition régulière en regroupant des pixels en rectangle (par exemples 3 par 3 pour une image de dimension 2), l'interpolation pourra s'effectuer comme un zoom de l'image régularisée des paramètres : on pourra choisir une interpolation type bilinéaire, (pour chaque pixel, les valeurs de paramètres de quatre zones voisines seront mises en oeuvre, pour une image de dimension 2, et de huit zones pour une image de dimension3). On pourra aussi choisir une interpolation type bi-cubique qui mettra en oeuvre 16 zones voisines dans le cas d'une image de dimension 2. De façon plus générale, tout type de zoom ou interpolation pourra être utilisé.

Dans le cas où le procédé ou système est utilisé afin de localiser un algorithme de modification globale ayant au moins un paramètre global, l'opération (604) de modification de l'image numérique pourra être effectuée comme suit :

- pour chaque pixel, nous déterminons pour chaque paramètre global une valeur locale de paramètre comme décrit précédemment.

- Les valeurs de pixel dudit pixel sont modifiées en appliquant l'étape de modification globale de l'algorithme de modification globale de l'image numérique avec comme valeurs de paramètres global, les valeurs locales de paramètre calculées à l'étape précédente.

Ces valeurs pouvant varier d'un pixel à l'autre mais de façon contrôlée, on obtient alors une modification de l'image numérique non plus globale, mais une modification différenciée et quasi-régulière par pixel. Ce cas est illustré par la figure 6 ; l'opération (604) de modification utilisant explicitement l'algorithme de modification globale.

### Etape de régularisation (506)

Nous allons maintenant décrire différentes variantes de réalisation de l'étape de régularisation ou deuxième moyen de calcul (506) permettant la régularisation.

### Notion d'ordre partiel sur les images de paramètres

Dans une variante de réalisation de l'invention on peut être amené à comparer l'ordre (plus petit ou plus grand) entre deux images de paramètres. Les images de paramètres étant formées de couples (zone, valeur de paramètre) et les valeurs de paramètres étant chacune une valeur numérique ou pouvant se ramener à une valeur numérique, l'ordre entre deux images de paramètre peut se définir à partir de n'importe qu'elle relation mathématique d'ordre partiel sur de tels ensembles de couples.

Dans le cas où une seule valeur de paramètre n'est affectée à chaque zone, on dira qu'une image de paramètre IP1 est plus grande qu'une image de paramètre IP2, si par exemples :

- pour une zone Zi prédéterminée, la valeur de paramètre Vpi(IP1) est plus grande que Vpi(IP2).
- pour une majorité de zone Zi, la valeur de paramètre Vpi(IP1) est plus grande que Vpi(IP2).
- pour toutes les zones Zi, la valeur de paramètre Vpi(IP1) est plus grande que Vpi(IP2).
- la valeur moyenne des valeurs de paramètres dans IP1 et plus grande que la valeur moyenne des valeurs de paramètres dans IP2...

**Image à variation contrôlée (414)**

Dans une réalisation de l'invention, on appelle une image à variation contrôlée (414), toute image des paramètres (201) ayant son niveau de variation plus petit que le niveau des variations de l'image numérique. L'image régularisée des paramètres (507) est donc un cas particulier d'image à variation contrôlée (414). Aussi, pour régulariser l'image des paramètres déterminée (505), on peut avantageusement sélectionner parmi les images à variation contrôlée (414) une image des paramètres (201) proche de l'image des paramètres déterminée (505). La figure 4.c présente, dans le cas particulier (411) d'image numérique (100), un exemple d'image à variation contrôlée (414).

**Image à variation contrôlée proche de l'image des paramètres déterminée**

La notion de proximité peut être définie selon une métrique ou distance mathématique sur l'espace des images des paramètres. Par exemple, la distance entre deux images de paramètres pourra être choisie comme la somme des différences quadratiques entre les valeurs de paramètres. Deux images de paramètres étant alors plus proches que deux autres si la distance entre les deux premières est plus petite que la distance entre les deux dernières.
La notion de proximité peut être aussi définie selon des critères non forcément relatifs à une distance mathématique, l'objet de la sélection étant de choisir une image à variation contrôlée qui soit relative à l'image des paramètres déterminée. Par exemple, on pourra sélectionner l'image à variation contrôlée, la plus petite, et dont les valeurs de paramètres sont, pour toutes, presque toutes ou pour une majorité des zones, plus grandes ou égales aux valeurs de paramètres de l'image des paramètres déterminée. La notion « proche » prend dans cet exemple un sens plus général qu'une notion relative à une distance mathématique.

**Régularisation par sélection (703)**

Dans certains cas de choix de définition de niveaux de variation de l'image numérique et de l'image des paramètres déterminée, il peut être relativement facile de représenter formellement ou numériquement l'ensemble ou un sous-ensemble (702) des images à variation contrôlée (414) . Dans ce cas, une variante avantageuse de l'étape de régularisation ou moyen de calculs (506) l'invention consiste à sélectionner, grâce à des moyens de sélection (703), parmi cet ensemble, l'image à variation contrôlée la plus proche de l'image des paramètres déterminée (505).
Citons pour l'exemple, le cas où le niveau de variation de l'image numérique entre deux zones est définie comme une constante C, indépendamment des valeurs de zones et que le niveau de variation entre deux zones d'une image des paramètres est l'amplitude de la différence des valeurs de paramètres. L'ensemble des images à variation contrôlée peut être représentée par comme un ensemble des fonctions Lipschitz, avec une constante de Lipschitz égale à la constante C. Pour un tel ensemble et pour toute métrique sur l'espace des fonctions, il existe une projection mathématique P, qui associe à toute fonction, la fonction la plus proche au sens de la métrique. Une telle projection peut être numériquement implémentée et associera à toute image des paramètres, l'image des paramètres à variation contrôlée, la plus proche au sens de la métrique choisie.
De même, selon une autre variante, on pourra sélectionner la fonction Lipschitz de constante C, la plus petite, parmi celles qui sont plus grandes que l'image des paramètres déterminée. Cette fonction est mathématiquement appelée l'extension Lipschitz supérieure, associée à l'image des paramètres déterminée. De même on pourra sélectionner la fonction Lipschitz de constante C, la plus grande, parmi celles qui sont plus petites que l'image des paramètres déterminée. On sélectionne alors l'extension Lipschitz inférieure. Comme précédemment, au sens de l'invention, on pourra considérer que les notions de plus grand (ou respectivement plus petit) entre deux images de paramètres signifie que les valeurs de zone de la première sont plus grande (respectivement plus petite) que les valeurs de zone de la deuxième image des paramètres, pour toutes, presque toutes, une majorité, la plupart, ou quelques zones. De cette façon, nous sélectionnant une image de paramètres régularisée qui satisfait aux conditions suivantes :

- la valeur de paramètre déterminée (Vpij) de l'image des paramètres déterminée d'une zone (Zi) quelconque est, au moins pour plusieurs zones, inférieure ou égale à ladite valeur de paramètre (Vpi(c)) de l'image des paramètres (c) sélectionnée,
- la valeur de paramètre (Vpi (c)) de l'image des paramètres (c) sélectionnée d'une zone (Zi) est, au moins pour plusieurs zones, inférieure ou égale aux valeurs de paramètre (Vpi(q)) pour la plupart des images à variation contrôlée (q) (Zi ;Vpi(q)) ;

La figure 7 illustre une mise en oeuvre de l'étape de régularisation ou deuxième moyen de calcul (506) au moyen d'une étape de sélection ou moyens de sélection (703) comme décrit ci-dessus. Sur cette figure, on a représenté par le même élément (703) les différentes formes de réalisation des moyens de sélection. A partir de l'image numérique et des valeurs de zones (100) sont établies (701) des données formelles ou numériques (702) relatives à l'ensemble ou un sous ensemble des images de paramètres à variation contrôlée (702) à partir desquelles des moyens de sélection (703) sélectionnent, l'image à variation contrôlée (507) la plus proche de l'image des paramètres déterminée (505).

## Régularisation par filtrage

Dans une variante de réalisation de l'invention, l'étape de régularisation (506) de l'image des paramètres déterminée en l'image régularisée des paramètres peut être effectuée grâce à un moyen de calcul (506) basé sur un filtre régularisant. Nous donnerons un exemple dans le cas où une seule valeur de paramètre est affectée à chaque zone. (Le cas où plusieurs valeurs de paramètres sont affectées à chaque zone, pouvant être traité de la même façon). Nous supposerons aussi que les valeurs de paramètres sont des valeurs numériques, ainsi l'image des paramètres déterminée peut être considérée comme une image numérique, les zones jouant le rôle des pixels et les valeurs de paramètres jouant le rôle des valeurs de pixels.

Dans le cadre de l'invention, nous appelons filtre régularisant : tout filtre modifiant une image numérique en une numérique présentant une variation moyenne plus faible que l'image numérique initiale.

Des exemples classiques de filtres régularisant sont : les convolutions par un noyau positif comme le filtre moyenneur, les filtres d'ordre comme le filtre médian, la fermeture, l'ouverture, les filtres de diffusion comme par exemple les diffusions isotropes ou anisotropes, etc...

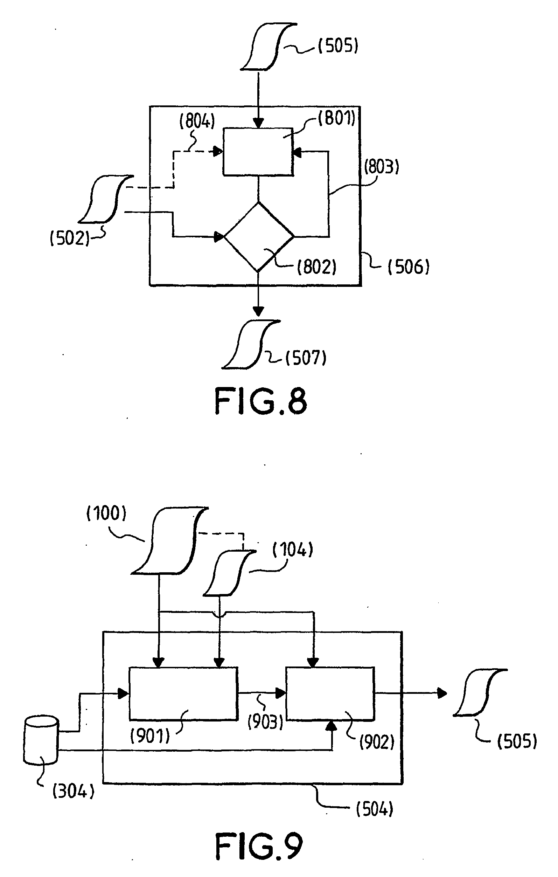

La figure 8 illustre une variante de mise en oeuvre de l'étape de régularisation ou deuxième moyen de calcul (506). Le moyen de calcul (506) met en oeuvre un filtre régularisant (801). Ce filtre régularisant est appliqué itérativement, une n+1-ieme image des paramètres étant ainsi construite par application du filtre à une n-ieme image des paramètres (803) ; le processus étant initialisé avec l'image des paramètres déterminée (505). Le processus peut être itéré (802) jusqu'à qu'une m-ieme image des paramètres présente un niveau de variation plus faible ou égal au niveau de variation de l'image numérique, la m-ieme image des paramètres, ainsi calculée, pouvant être choisie comme l'image régularisée des paramètres (507). Cependant, pour des soucis de temps de calcul, il pourra être avantageux de choisir un critère d'arrêt (802) quantitatif : comme par exemple d'itérer un nombre fixe de fois, ou jusqu'en que la n+1-ieme image ne présente que peu de modification de valeurs de paramètres par rapport à la n-ieme image.

A noter que pour calculer la n+l-ième image, le filtre ne sera pas forcement appliqué à toutes les zones de la n-ieme image des paramètres. Il pourra n'être qu'appliqué notamment aux zones pour lesquelles la n-ieme image des paramètres présente un niveau de variation plus grand que le niveau de variation de l'image numérique. Lorsque le filtre dispose comme paramètre de filtrage d'une force F permettant de régler le degré de modification des valeurs de pixel d'une image numérique, par exemple lorsque F égal à 0, les valeurs de pixel ne sont pas modifiées et lorsque F égal à 1, les valeurs de pixel sont normalement modifiées ; la force du filtre peut être par exemple avantageusement utilisé comme suit : le filtre (801) est appliqué à une n-ieme image des paramètres (803) avec une force F d'autant plus grande qu'en la zone considérée le niveau de variation de la n-ieme image des paramètres (803) est plus grand le niveau de variation de l'image numérique, ce dernier étant symbolisé dans la figure 8 par (804). L'utilisation de la force F joue alors le rôle d'une valeur corrective.

## Valeur corrective

Une variante d'implémentation de l'étape de régularisation (506) peut aussi être faite en utilisant en chaque zone et ses voisines explicitement une valeur corrective, fonction des variations de l'image numérique entre lesdites zones. Nous supposerons, qu'une seule valeur de paramètre est affectée à chaque zone, le cas plus général se déduisant naturellement de ce cas particulier. L'image régularisée des paramètres s'obtient itérativement : une n+1-ieme image des paramètres étant construite à partir d'une n-ieme image des paramètres, le processus étant initialisé avec l'image des paramètres déterminée.

A chaque itération, on détermine, successivement pour toute les zones, la valeur de paramètre Vpi (n+1) d'une zone Zi de la n+1-ieme image des paramètres en combinant, selon une formule de combinaison :

- les valeurs de paramètre Vpk(n) de la n-ieme image dont les zones Zk sont situées dans un voisinage de la zone Zi et / ou les valeurs de paramètre Vpk (n+1) de la n+1-ieme image dont les zones Zk sont situées dans un voisinage de la zone Zi et pour lesquelles les valeurs de paramètres Vpk(n+1) ont été précédemment déjà calculées.

de valeurs correctives fonction des variations de l'image numérique entre les zones Zk et Zi.

Comme précédemment, on arrêtera les itérations à une m-ieme image des paramètres, si la m-ieme image des paramètres ainsi construite présente, au sens de l'invention, un niveau de variation plus faible que le niveau de variation de l'image numérique ou si un critère quantitatif prédéfini est rempli.

# EP 1 673 728 B1

**Extension régulière de l'image des paramètres déterminée.**

Ce processus précédent peut être utilisé avec différentes formules de combinaison permettant de calculer la valeur de paramètre Vpi(n+1) d'une zone Zi de la n+1-ieme image des paramètres.

On pourra notamment calculer Vpi(n+1) en :

- calculant pour chacune des zones contiguës Zk à la zone Zi, une valeur candidate Wk résultant de la soustraction à Vpk(n), d'une valeur corrective égale à une fonction f de la variation de l'image numérique entre les zones Zk et Zi, et en choisissant ensuite la valeur la plus grande parmi les valeurs Wk ainsi calculées et la valeur de paramètre Vpi(n).

  On obtient ainsi une extension explicite régulière supérieure de l'image des paramètres déterminée. En effet il sera possible pour l'homme de l'art de prouver qu'il existe au moins une valeur m, telle que la m-ieme image des paramètres construites par le processus, a les propriétés suivantes :

  + pour toutes les zones, les valeurs de paramètres de la m-ieme image sont supérieure aux valeurs de paramètres de l'image des paramètres déterminée, rendant en ce sens la m-ieme image plus grande ou égale à l'image des paramètres déterminée,
  + pour tous les couples de zones contiguës, la variation entre les deux zones du couple de la m-ieme image est inférieure à la fonction f de la variation de l'image numérique entre les deux zones, rendant en ce sens le niveau de variation de la m-ieme image des paramètres plus faible que le niveau de variation de l'image numérique.

- calculant pour chacune des zones contiguës Zk à la zone Zi, une valeur candidate Wk résultant de l'addition à Vpk(n), d'une valeur corrective égale à une fonction f de la variation de l'image numérique entre les zones Zk et Zi, on choisie ensuite la valeur la plus petite parmi les valeurs Wk ainsi calculées et la valeur de paramètres Vpi(n). On obtient ainsi une extension explicite régulière inférieure de l'image des paramètres déterminée. De même que précédemment, il existe au moins une valeur m, pour laquelle la m-ieme image des paramètres ainsi construite est plus petite ou égale à l'image des paramètres déterminée et présente un niveau de variation plus faible que le niveau de variation de l'image numérique.

Dans le cas où les zones forment un maillage régulier d'une portion d'un plan, comme par exemple si les zones sont les pixels d'une image numérique de dimension 2, on pourra avantageusement implémenter le processus d'une façon particulière :

Une n+1-ieme image des paramètres étant construite à partir d'une n-ieme image des paramètres en calculant les valeurs Vpi(n+1) des zones Zi, successivement par exemple de haut en bas et de gauche à droite pour les n pairs et de bas en haut et de droite à gauche pour les n impairs et en utilisant une des deux formules de combinaison suivantes :

- on détermine la valeur Vpi(n+1) en calculant pour chacune des zones contiguës Zk à la zone Zi, pour lesquelles la valeur Vpk(n+1) est déjà calculée, une valeur candidate Wk résultant de la soustraction à Vpk(n+1), d'une valeur corrective égale à une fonction f de la variation de l'image numérique entre les zones Zk et Zi et en choisissant ensuite la valeur la plus grande parmi les valeurs Wk ainsi calculées et la valeur de paramètre de la Vpi(n).
- on détermine la valeur Vpi(n+1) en calculant pour chacune des zones contiguës Zk à la zone Zi, pour lesquelles la valeur Vpk(n+1) est déjà calculée, une valeur candidate Wk résultant de l'addition à Vpk(n+1), d'une valeur corrective égale à une fonction f de la variation de l'image numérique entre les zones Zk et Zi, et en choisissant ensuite la valeur la plus petite parmi les valeurs Wk ainsi calculées et la valeur de paramètres Vpi(n).

En écriture algorithmique, le calcul de la valeur Vpi(n+1) pour chaque zone Zi, peut se transcrire comme suit. (Nous notons Var(i,k) la variation de l'image numérique (100) entre les zone Zi et Zk. Par exemple, cette variation pourra être tout simplement la différence des valeurs de zones. Nous supposerons aussi dans l'exemple qu'il y a K zones voisines à la zones Zi)

Cas de la première formule de combinaison :

Pour chaque k, tel que la zone Zk est voisine à la zone Zi :

Si Vpk(n+1) déjà calculé :

$$Wk = Vpk(n+1) + f ( Var(i,k) )$$

sinon

$$Wk = Vpk(n) + f ( Var(i,k) )$$

Vpi(n+1) = MAX(Vpi(n), W1, ..., WK)

Cas de la deuxième formule de combinaison :

Pour chaque k, tel que la zone Zk est voisine à la zone Zi :

Si Vpk(n+1) déjà calculé :

$$Wk = Vpk(n+1) - f ( Var(i,k) )$$

sinon

$$Wk = Vpk(n) - f ( Var(i,k) )$$

Vpi(n+1) = MIN (Vpi (n) , W1, ..., WK)

Une fois le critère d'arrêt des itérations satisfait, on obtient une extension implicite régulière supérieure de l'image des paramètres déterminée, dans le premier cas, et une extension implicite régulière inférieure de l'image des paramètres déterminée. Empiriquement, le nombre d'itérations nécessaire pour atteindre un critère d'arrêt, pour cette variante dite « implicite » est bien plus faible que pour la construction des extensions explicites régulières de l'image des paramètres déterminée.

**Localisation fonction gamma**

Nous décrivons maintenant, une variante de réalisation de l'invention ici dénommée variante gamma local, plus particulièrement adaptée pour changer la luminance de façon locale et quasi régulière d'une image numérique photographique. De façon avantageuse, on choisira pour chaque zone (103), comme valeur de zone (104) par exemple la moyenne des luminances des pixels (101) associés (105) à la zone (103). Dans le cas d'une image couleur RGB, la luminance d'un pixel pourra être définie comme la valeur la plus grande parmi les valeurs de pixel du pixel. Pour chaque zone (103), on affecte une valeur de paramètre déterminée (305) qui peut être par exemple la valeur de zone (104) elle-même.

La variante gamma local prévoit une étape supplémentaire de modification de l'image des paramètres déterminée (902) ou quatrième moyen de calcul (902). Par exemple on pourra modifier les valeurs de paramètres d'une zone de l'image des paramètres déterminée selon que la zone se situe ou non dans une partie sombre et de faible étendue de l'image numérique ; de telle sorte à obtenir une modification de l'image numérique différenciée en ces parties.

La figure 9 illustre cette variante de mise en oeuvre de l'étape de détermination (504) de l'image des paramètres déterminée (505), dans le cas de la variante gamma, local. A partir de l'image numérique (100), des valeurs de zones (104) et éventuellement de données extérieures au procédé ou système (préférence utilisateur) (304) une première image des paramètres déterminée (903) est déterminée (901). Cette première image des paramètres déterminée (903) est ensuite modifiée en mettant en oeuvre un moyen de calcul (902), paramétrés par des données extérieures au procédé ou système et de données relatives à l'image (taille de l'images, taille des zones, etc...) pour donner l'image des paramètres déterminée (505). Sur cette figure, on a représenté par le même élément (902) les différentes formes de réalisation des moyens de calculs.

Avant de donner des exemples de modification (902) de l'image des paramètres déterminée, décrivons un exemple de mise en oeuvre du procédé ou système particulièrement adaptée à la variante gamma local :

Le deuxième moyen de calcul (506) (ou étape de régularisation) pourront pour obtenir l'image régularisée des paramètres (507) construire une extension implicite régulière de l'image des paramètres déterminée (505), en choisissant par exemple comme fonction f déterminant les valeurs correctives, une fonction affine de pente inférieure ou égale à 1.

Les valeurs de pixels (102) seront ensuite modifiées (par le troisième moyen de calcul ou étape de modification (508)), pour chaque pixel :

- en interpolant une valeur locale de paramètre (603) par exemple en calculant la valeur locale comme une combinaison arithmétique des valeurs de paramètres de l'image régularisée des paramètres correspondantes aux zones voisines du pixel.
- en calculant un coefficient c, par exemple en appliquant une fonction prédéterminée à la valeur locale de paramètre (603) comme par exemple une fonction dite gamma. Afin de plus augmenter la luminance pour les valeurs de luminances faibles, on choisira de préférence une fonction ayant une pente négative au moins au delà d'une luminance donnée. Pour des valeurs de paramètres allant de 0 à 255, on pourra, par exemple, prendre la fonction qui a une valeur x supérieure ou égale à 1, associe la valeur 255*((x/255) à la puissance gamma), pour un gamma entre -1 et 0, et qui pour une valeur x égale à 0, associe la valeur 0.
- en multipliant enfin les valeurs de pixels (par exemple les valeurs de pixels correspondant au plan couleur RGB dans le cas d'une image couleur) par le coefficient c ainsi calculé.

Une telle mise en oeuvre des étapes de régularisation (506) et de correction (508), induit une augmentation, des valeurs de pixels (et en particulier de la luminance) d'un pixel d'autant plus grande que la valeur de paramètre régularisée associée est petite.

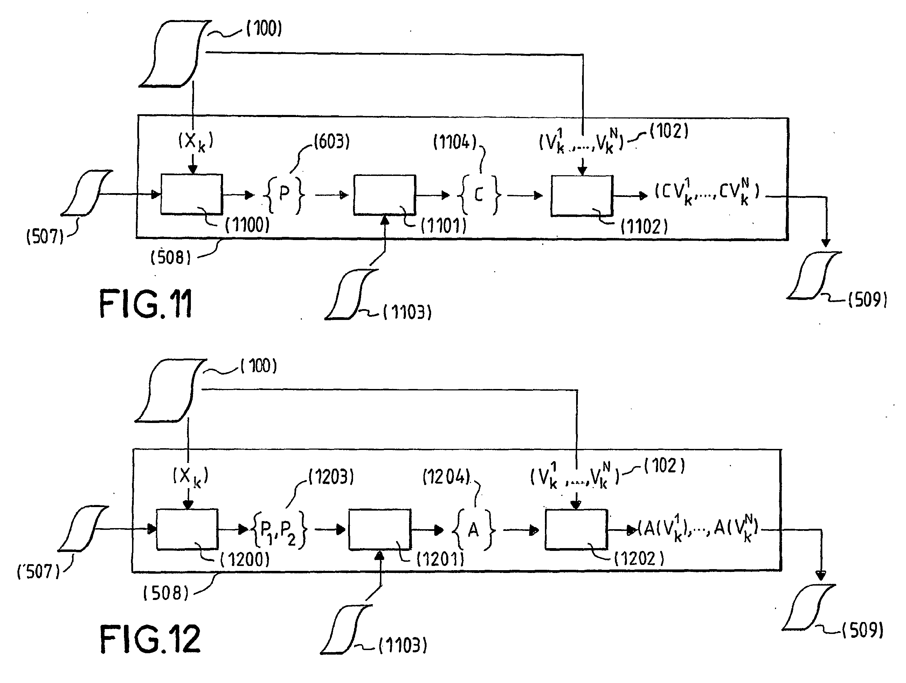

Cette variante de mise en oeuvre de l'étape de modification ou troisième moyen de calcul (508) est illustrée dans la figure 11. Pour chaque pixel xk de l'image numérique (100), on exécute les opérations suivantes :

- l'opération d'interpolation (1100) de la valeur locale de paramètre (603),
- l'opération de calcul (1101) du coefficient c (1104), à partir de la valeur locale de paramètre (603) et au moyen d'une fonction prédéterminée (1103)
- l'opération de multiplier (1102) les valeurs de pixels (102) par le coefficient c (1104).

**Ombres ou partie sombre (1002)**

Nous présentons maintenant un exemple d'étape de modification (902) de l'image des paramètres déterminée (505) visant à éclaircir des parties de l'image numérique mal éclairées ou exposées sans pour autant introduire des artefacts dans l'image résultante :

Pour cela l'étape de modification (902) (utilisant le moyen de calcul (902)) vise à modifier l'image des paramètres déterminée (505) de telle sorte à ce que la valeur de paramètre (203) d'une zone (103) soit autant que possible liée à la quantité de lumière reçue par les pixels (101) associés (105) à la zone (103). On conservera la valeur de paramètre lorsque la zone correspond à une partie à l'ombre ou faiblement éclairée, afin de maintenir l'augmentation de luminance pour les pixels associés à la zone. Et, on augmentera la valeur de paramètre lorsque la zone correspond à une partie bien éclairée, afin de réduire l'augmentation de luminance pour les pixels associés à la zone. Pour cela, nous considérons qu'en général les parties de l'image numérique, de grande taille et constituées de zones sombres sont des parties faiblement éclairées dites « parties sombres » (1002) et celles de petite taille sont des parties naturellement sombres mais normalement éclairées. La notion de grande ou petite taille pouvant être définie comme relative à un nombre de zones respectivement inférieur à un seuil ou supérieur à un seuil déterminé, et notamment fonction du nombre de pixels de l'image numérique. On peut alors modifier (902) l'image des paramètres déterminée (505) comme suit :

- On peut procéder de façon explicite. On recherche les parties sombres (1002) comme étant des ensembles de zones contiguës pour lesquelles la valeur de zone est inférieure à un seuil et pour lesquels toute zone contiguë a une valeur de zones supérieure au seuil. Pour chaque zone d'une partie sombre et de faible taille, on calcule alors des nouvelles valeurs de paramètres déterminées à partir des valeurs de paramètres déterminées des zones voisines à ladite partie. Par exemple en remplaçant toutes les valeurs de paramètres déterminées des zones de la partie par une combinaison arithmétique (moyenne, valeur minimale, interpolation, etc...) des valeurs de paramètres déterminées des zones contiguës à ladite partie.
- On peut aussi procéder de façon implicite, c'est à dire sans pré-détection des « petites » parties sombres, en appliquant un filtre « enlevant » les petites parties sombres. Un tel filtre peut être une simple fermeture utilisant un élément structurant lié à la taille définissant la notion de « petite » partie. Par exemple, l'élément structurant pourra être une forme géométrique (disque, carré, ...) regroupant un nombre déterminé de zones.

L'image des paramètres déterminée (505) obtenue au moyen de l'une ou l'autre variante présentera alors en général de fortes variations en des zones où l'image numérique n'en présente pas. L'étape de régularisation (506) appliquée à l'image des paramètres déterminée (505), telle que décrite ci-dessus, est alors indispensable pour assurer la non apparition des phénomènes de halos ou de bords dans l'image numérique résultante.

D'autres exemples de modifications (902) de l'image des paramètres déterminée peuvent être :

- l'image des paramètres déterminée pourra être modifiée au moyen d'un filtre, notamment au travers d'une fermeture ou d'un filtre moyenneur. Cela permet de faire en sorte que les valeurs de pixel soient modifiées en fonction des caractéristiques de luminance des pixels situés dans leur voisinage et non pas en fonction de leur propre luminance.
- l'image des paramètres déterminée pourra être modifiée en réduisant ou augmentant les valeurs de paramètres de certaines zones et ce afin de prendre en compte des préférences prédéfinies de modification de la luminance. Cette variante peut être particulièrement adaptée à une utilisation du procédé ou système dans le cadre d'un logiciel interactif de traitement des images. Par exemple, si un utilisateur désire augmenter la luminance sur une partie de l'image, qu'il détourera grossièrement à la main. On diminuera les valeurs de paramètres pour les zones situées dans la partie grossièrement détourée. La encore, l'étape de régularisation appliquée à l'image des paramètres déterminée, telle que décrite ci-dessus, est alors indispensable pour assurer la non apparition des phénomènes de bords, notamment à la frontière de la partie détourée.

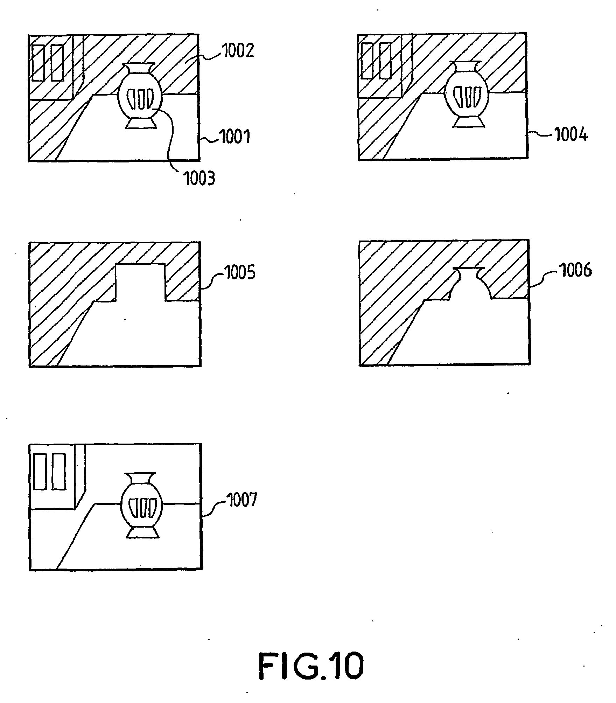

La figure 10 illustre cette variante de mise en oeuvre du procédé et système, qui reprend le procédé général tel que illustré figure 5 et la variante de détermination de l'image des paramètres déterminée, mettant en oeuvre le moyen de calcul (902), variante illustrée figure 9. Une première image des paramètres déterminée (903) est déterminée en prenant, pour chaque zone, comme valeur de paramètres déterminée, la valeur de luminance de la zone. La valeur de paramètres déterminée d'une zone est choisie comme la luminance de la zone. Le contenu d'un exemple d'image numérique (100) est représenté sous une forme schématique (1001). Le contenu montre un vase en premier plan, bien exposé par exemple par un flash ; en deuxième plan une partie mal exposé et sombre (1002). En (1003), sont illustrées des (petites) parties du vase naturellement sombres. Le contenu de la première image des paramètres déterminée (903) est illustré en (1004). La première image des paramètres déterminée est modifiée par le moyen de calcul (902) qui effectuera, par exemple, une fermeture pour donner l'image des paramètres déterminée (505) dont le contenu est représentée en (1005). Le contenu de l'image des paramètres déterminée (1005) présente des variations entre des zones où l'image numérique (100) et (1001) n'en présente pas. L'image des paramètres déterminée (505) est régularisée (506) en une image régularisée des paramètres (507), dont le contenu est représenté en (1006). L'image numérique (100) est alors modifiée (508) en fonction de l'image régularisée des paramètres (507) pour obtenir ainsi une image numérique modifiée (509), où les modifications sont différenciées et quasi-régulière par pixel. Le contenu de l'image numérique modifiée (509) est alors représentée en (1007) : les parties sombres et grandes de l'image numérique (1002) sont éclaircies, alors que les parties sombres et petites (1003) restent identiques. De plus les bords des parties éclaircies suivent parfaitement les bords initiaux de l'image numérique, de sorte que l'image numérique est modifiée sans apparition d'artefacts visuels.

## Localisation fonction niveaux

Nous allons maintenant décrire une variante de mise en oeuvre du procédé ou système consistant à localiser l'algorithme dit des niveaux. Cette variante sera décrite dans le cas d'une image photographique couleur RGB, où les valeurs de pixel pour chaque plan couleur peuvent prendre des valeurs entre 0 et 255.

On pourra avantageusement choisir comme zones des groupes contigus de NxN pixels, où N est un nombre entier déterminé par exemple en fonction du nombre de pixels de l'image numérique. Pour chaque zone, on affectera deux valeurs de zones ; la première (resp. la deuxième) pouvant être la valeur la plus petite (resp. la plus grande) entre les moyennes des valeurs de pixels des pixels associés à la zone considérée pour chaque plan couleur. Les deux valeurs de paramètres déterminées (305) par zones sont choisies égales aux valeurs de zone (104). On obtient alors deux images de paramètres déterminée (505) ou une image de paramètres déterminée (505) constituées de deux plans ou canaux.

Les images des paramètres déterminée (505) sont alors régularisées (506) pour produire deux images régularisées des paramètres (507). De façon avantageuse, on pourra obtenir les images régularisées des paramètres (507) en construisant pour chacune des deux images, une extension implicite régulière inférieure pour la première et supérieure pour la deuxième.

L'étape de modification (508) pourra ensuite se faire comme suit : on pourra interpoler (1200) pour chaque pixel (101) une première valeur de paramètre relative au pixel (603) à partir des valeurs de paramètres de la première image régularisée des paramètres (507) relative aux zones voisines au dit pixel et la position relative du pixel dans sa zone associée. On procédera de même avec la deuxième image régularisée des paramètres (507) pour calculer pour chaque pixel (101) la deuxième valeur de paramètre relative audit pixel (603). Les valeurs de pixels (102) d'un pixel (101) peuvent alors être modifiées en leur appliquant l'unique transformation affine (1204) qui transforme la première valeur locale de paramètre à 0, la deuxième valeur locale de paramètre à 255.

Cette variante de mise en oeuvre de l'étape de modification (508) ou troisième moyen de calcul (508) est illustrée dans la figure 12. Pour chaque pixel xk de l'image numérique (100), on exécute les opérations suivantes :

- l'opération d'interpolation (1200) d'une première valeur locale de paramètre et d'une deuxième valeur locale de paramètre (1203),
- l'opération de choisir (1201) une transformation affine A (1204), à partir des deux valeurs locales de paramètre (1203) et éventuellement selon des préférences utilisateurs (1103)
- l'opération d'appliquer (1202) la transformation affine (1104) aux valeurs de pixels (102).

**Changement de balance des blancs**

Nous allons maintenant décrire une variante de mise en oeuvre du procédé ou système consistant à localiser un algorithme modification locale de balance des blancs. Cette variante sera décrite dans le cas d'une image photographie couleur RGB.

La modification de balance des blancs est couramment utilisée en photographie numérique afin de neutraliser la couleur dominante de l'illuminant d'une scène prise en photo. Elle s'effectue en deux étapes. Une première, dite étape d'estimation de l'illuminant principal, consiste, à partir des valeurs de pixel, à estimer la couleur de l'illuminant. La deuxième étape, dite étape de neutralisation de l'illuminant principal, modifie, ensuite, les valeurs de pixels afin de « neutraliser » la couleur estimée de l'illuminant rendant ainsi l'image numérique perceptuellement plus proche de ce qu'aurait vu un observateur de la scène au moment de sa capture photographique. Des exemples de tels algorithmes se trouvent dans le livre suivant : "Color Appearance Models", M. Fairchild, Addison Wesley, 1998, ISBN 0201634643.

Cependant il existe des images numériques où plusieurs illuminants sont présents. C'est le cas notamment pour des images numériques de scènes extérieures au soleil et comportant des zones ombrées. La partie de la scène située au soleil est majoritairement illuminée par le soleil, alors que la partie de la scène située à l'ombre est majoritairement illuminée par la lumière diffuse du ciel qui est naturellement plus « bleue » que celle du soleil.

Une modification globale de la balance ne pourra pas neutraliser les deux illuminants correctement. La variante de réalisation du procédé ou système vise à palier à ce problème.

Nous procédons alors d'une façon identique, à la variante dite, gamma locale, précédemment décrite, à l'exception des changements suivants :

- Pour chaque zone (103), on affecte une valeur de paramètre déterminée (203) pouvant être

  + le résultat de l'étape d'estimation de l'illuminant principal appliquée à la portion de l'image numérique restreinte à des zones voisines à ladite zone,
  + un choix d'illuminant, selon une fonction de choix dépendant de la luminance moyen des pixels voisins à ladite zone ; par exemple illuminant correspondant au soleil pour les fortes valeurs de luminance et illuminant correspondant à la lumière diffuse du ciel pour les faibles valeurs de luminance ;

- la modification (508) des valeurs de pixel (102) de l'image numérique (100) s'effectuant alors en appliquant à chaque pixel une étape de neutralisation de l'illuminant en choisissant l'illuminant comme la valeur de paramètre régularisée d'une zone voisine au pixel.

L'image numérique est alors modifiée de telle sorte à neutraliser un illuminant de manière différenciée et quasi régulière par pixel

**Applications de l'invention**

L'invention présente de nombreuses applications. On citera à titre d'exemples : les appareils photographiques analogiques ou numériques, les caméras vidéo analogiques ou numériques, les appareils de reproduction des images fixes ou animées, et les laboratoires ou moyens de traitement d'image. L'invention peut s'appliquer aux images numérisées provenant de, et/ou destinées à, divers appareils, notamment:

- un appareil de capture d'image, comme par exemple un appareil photo jetable, un appareil photo numérique, un appareil reflex, un scanner, un fax, un endoscope, un caméscope, une caméra de surveillance, un jouet, une caméra intégrée ou reliée à un téléphone, à un assistant personnel ou à un ordinateur, une caméra thermique, un appareil d'échographie,

- un appareil de restitution d'image comme un dispositif à écran, un projecteur, un téléviseur ou moniteur, des lunettes de réalité virtuelle ou une imprimante,
- un appareil plus complexe comme un scanner/fax/imprimante, un Minilab d'impression photo, un appareil de vidéo-conférence.

Le procédé peut être intégré, en tout ou partie, à un ordinateur par exemple selon l'une des façons suivantes :

- Dans un système d'exploitation, par exemple de marque "Windows" ou "Mac OS", le moyen de traitement modifie automatiquement les images provenant de, ou destinées à, plusieurs appareils. Le procédé peut intervenir lors de l'entrée de l'image dans le système, ou lors d'une demande d'impression par l'utilisateur.
- Dans une application de traitement d'images, par exemple "Photoshop", le moyen de traitement modifie automatiquement les images provenant de, ou destinées à, plusieurs appareils, par exemple des scanners, appareils photos, imprimantes. Le procédé peut intervenir lorsque l'utilisateur active une commande de filtre dans "Photoshop".
- Dans un appareil de tirage photo (par exemple "Photofinishing" ou "Minilab" en langue anglaise), le moyen de traitement modifie les images provenant de plusieurs appareils photo, par exemple des jetables, appareils photos numériques, disques compacts. Le procédé peut intervenir au moment où les travaux d'impression sont lancés.
- Sur un serveur, par exemple sur Internet, pour améliorer automatiquement la qualité des images provenant de plusieurs appareils photos (par exemple des jetables ou des appareils photos numériques). Le procédé peut s'effectuer au moment où les images sont enregistrées sur le serveur, ou au moment où des travaux d'impression sont lancés.

### NOMENCLATURE

| NOM | | Numéro | |
|---|---|---|---|
| 1. Image numérique | | 100 | |
| 1.Pixel(s) | | 101 | |
| 1. Valeur(s) de pixels | | 102 | |
| 1.Zone(s) | | 103 | |
| 1.Zone voisine | Nota : relation avec pixel à sous-échantillonnage, | 105 | |
| Zone voisine à une autre zone | | 106 | |
| 1.Zone contiguë | Nota : relation avec zone à variation | 403 | |
| 1.Variation de l'image numérique | | 401 | |
| 1.Valeur(s) de zone | | 104 | |
| 1.Valeur(s) de paramètre | | 203 | |
| 1.Image des paramètres | | 201 et 202 | |
| 1.Valeur(s) de paramètre déterminée | | 305 | |
| 1. Image des paramètres déterminée | | 505 | |
| 1. Variation de l'image des paramètres | | 402 | |
| 1.Image régularisée des paramètres | | 507 | |
| 1.Niveau de variation (de l'image régularisée des paramètres) | | 415 | |
| 6. Image(s) à variation contrôlée | | 414 | ou 702 |
| 9.Valeur corrective | | | |
| 9.voisine/Voisinage | | | |
| 10. valeur de paramètre relative audit pixel déterminé | | 603 | |
| 11.Coefficient | | 1104 | |

## EP 1 673 728 B1

(suite)

| | | |
|---|---|---|
| 12.Première valeur de paramètre | | 1203 |
| 12.Deuxième valeur de paramètre | | 1203 |
| 12.Transformation affine | | 1204 |
| 15.Parties sombres | | 1002 |
| | | |
| 16. premier moyen de calcul | | 504 |
| 16. deuxième moyen de calcul | | 506 |
| 16. troisième moyen de calcul | | 508 |
| 21. premiers moyens de sélection | | 703 |
| 22. deuxièmes moyens de sélection | | 703 |
| 23. troisièmes moyens de sélection | | 703 |
| 25. l'opération d'interpoler | | |
| 25. modification | | |
| 26. l'opération d'interpoler 1102 | | 1100 |
| 26. l'opération de calculer | | 1101 |
| 26. l'opération de multiplier | | 1102 |
| 30. quatrième moyen de calcul | | 902 |

**Revendications**

1. Procédé pour modifier une image numérique (100) composée de pixels ayant des valeurs de pixels (102) ; ladite image numérique étant décomposée en zones (103) ; chacun desdits pixels étant associé à au moins une zone voisine (105) ; au moins une valeur de zone (104) étant affectée à chacune desdites zones Zi (103); au moins une valeur de paramètre Vpij (203) étant affectée à chacune desdites zones Zi (103); un ensemble de couples (Zi Vpij), composés d'une zone Zi (103) et d'une valeur de paramètre Vpij (203) associée à ladite zone (103), constituant une image des paramètres (201);
ledit procédé comprenant :

   - a) l'étape de déterminer des valeurs de paramètre déterminées Vpir (305), notamment en fonction des valeurs de zone (104) de ladite image numérique (100), pour chaque zone (103); ladite image des paramètres (201) ainsi constituée étant ci-après dénommée l'image des paramètres déterminée (505);

   lesdites valeurs de zone (104) variant entre au moins une desdites zones (103) et une zone contiguë (403), ladite variation étant ci-après dénommée la variation de l'image numérique (401) ;
   lesdites valeurs de paramètre déterminées (305) variant entre ladite zone (103) et au moins une zone contiguë (403), ladite variation étant ci-après dénommée la variation de l'image des paramètres déterminée (402) ;
   ledit procédé comprenant en outre les étapes suivantes :

   - b) l'étape de régulariser l'image des paramètres déterminée (505) en fonction de ladite variation de l'image numérique (401), en réduisant lesdites variations de l'image des paramètres déterminée (505) pour produire une image des paramètres, ci-après dénommée image régularisée des paramètres (507), ayant un niveau de variation plus faible que celui desdites variations de l'image numérique (401);
   - c) l'étape de modifier les valeurs de pixel (102) d'un pixel (101) déterminé de ladite image numérique (100) en fonction des valeurs de paramètre (203) de ladite image régularisée des paramètres (507), relatives aux zones voisines dudit pixel déterminé ;

   de sorte que ladite image numérique est ainsi modifiée de manière différenciée pour chacun desdits pixels et de manière quasi régulière pour des zones contiguës.

**2.** Procédé selon la revendication 1 ; ledit procédé étant tel que chaque zone (103) est constituée par un pixel (101) .

**3.** Procédé selon l'une quelconque des revendications 1 ou 2 ; ledit procédé étant tel que chaque zone (103) est constituée par un groupe de pixels (101) contigus.

**4.** Procédé selon l'une quelconque des revendications 1 à 3 ; lesdites valeurs de paramètre déterminées (305) étant lesdites valeurs de zone (104).

**5.** Procédé selon l'une quelconque des revendications 1 à 4 ; ladite valeur de zone (104) étant la valeur maximum des valeurs de pixels (102) associés à ladite zone (103) et/ou la valeur minimale des valeurs de pixels (102) associés à ladite zone (103) et/ou une valeur calculée à partir des valeurs de pixels (102) associés à ladite zone (103).

**6.** Procédé selon l'une quelconque des revendications 1 à 5 ; une seule valeur de paramètre déterminée (305) ayant été affectée à chaque zone (103) ;
lesdites images de paramètre (201) telles que leur niveau de variation soit plus faible que celui desdites variations de l'image numérique étant ci-après dénommées les images à variation contrôlée ; pour réduire lesdites variations de l'image des paramètres déterminée et produire une image régularisée des paramètres (507) ayant un niveau de variation plus faible que celui desdites variations de l'image numérique (100) ledit procédé comprenant en outre :

  - l'étape de sélectionner parmi lesdites images à variation contrôlée une image des paramètres proche de l'image des paramètres déterminée (505) ;

de sorte qu'on obtient ainsi une image des paramètres constituant l'image régularisée des paramètres.

**7.** Procédé selon l'une quelconque des revendications 1 à 5 ; une seule valeur de paramètre déterminée (305) ayant été affectée à chaque zone (103) ;
lesdites images de paramètre telles que leur niveau de variation soit plus faible que celui desdites variations de l'image numérique étant ci-après dénommées les images à variation contrôlée ; pour réduire lesdites variations de l'image des paramètres déterminée (505) et produire une image régularisée des paramètres (507) ayant un niveau de variation plus faible que celui desdites variations de l'image numérique ledit procédé comprenant en outre :

  - l'étape de sélectionner parmi lesdites images à variation contrôlée une image des paramètres c Zi ; Vpi (c) qui satisfait aux conditions suivantes :

      * la valeur de paramètre déterminée Vpij de l'image des paramètres déterminée d'une zone (Zi) quelconque est, au moins pour plusieurs zones, inférieure ou égale à ladite valeur de paramètre Vpi(c) de l'image des paramètres c sélectionnée,
      * la valeur de paramètre Vpi(c) de l'image des paramètres c sélectionnée d'une zone (Zi) est, au moins pour plusieurs zones, inférieure ou égale aux valeurs de paramètre Vpi(q) pour la plupart des images à variation contrôlée q Zi ;Vpi (q) ;

de sorte qu'on obtient ainsi une image des paramètres constituant l'image régularisée des paramètres.

**8.** Procédé selon l'une quelconque des revendications 1 à 5 ; une seule valeur de paramètre déterminée (305) ayant été affectée à chaque zone (103) ;
lesdites images de paramètre telles que leur niveau de variation soit plus faible que celui desdites variations de l'image numérique étant ci-après dénommées les images à variation contrôlée ; pour réduire lesdites variations de l'image des paramètres déterminée (505) et produire une image régularisée des paramètres (507) ayant un niveau de variation plus faible que celui desdites variations de l'image numérique ledit procédé comprenant en outre :

  - l'étape de sélectionner parmi lesdites images à variation contrôlée une image des paramètres c Zi ; Vpi (c) qui satisfait aux conditions suivantes :

      * la valeur de paramètre déterminée Vpij de l'image des paramètres déterminée d'une zone (Zi) quelconque est, au moins pour plusieurs zones, supérieure ou égale à ladite valeur de paramètre Vpi (c) de l'image des paramètres c sélectionnée,
      * la valeur de paramètre Vpi(c) de l'image des paramètres c sélectionnée d'une zone (Zi) est, au moins pour plusieurs zones, supérieure ou égale aux valeurs de paramètre Vpi (q) pour la plupart des images à variation contrôlée q Zi ; Vpi (q) ;

de sorte qu'on obtient ainsi une image des paramètres constituant l'image régularisée des paramètres.

**9.** Procédé selon l'une quelconque des revendications 1 à 5 ; pour régulariser l'image des paramètres déterminée en fonction de ladite variation de l'image numérique, ledit procédé mettant en oeuvre l'algorithme comprenant les étapes suivantes :

- l'étape de déterminer, pour une zone Zi définie, la valeur de paramètre Vpi(n+1) dudit couple (Zi ;Vpi(n+1)) de la n+1-ieme image des paramètres en combinant :

* les valeurs des paramètres Vpj(n) et/ou Vpj(n+1) des couples de la n-ieme image et/ou de la n+1-ieme image dont les zones Zj sont situées dans le voisinage 106 de ladite zone Zi, avec
* des valeurs correctives, fonctions des variations de l'image numérique entre ladite zone Zi et lesdites zones Zj,

- l'étape d'itérer de proche en proche la précédente étape ;

ledit algorithme étant initialisé en l'appliquant la première fois aux couples de ladite image des paramètres déterminée.

**10.** Procédé selon l'une quelconque des revendications 1 à 9 ; pour modifier les valeurs de pixel (102) d'un pixel (101) déterminé de ladite image numérique (100) ledit procédé comprenant en outre les étapes suivantes :

- l'étape d'interpoler une valeur de paramètre relative audit pixel déterminé (603) à partir des valeurs de paramètre de ladite image régularisée des paramètres (507), relatives aux zones voisines dudit pixel déterminé,
- l'étape de modifier la valeur dudit pixel déterminé en mettant en oeuvre la valeur de paramètre (603) ainsi interpolée.

**11.** Procédé selon l'une quelconque des revendications 1 à 9 ; une seule valeur de paramètre déterminée (305) ayant été affectée à chaque zone (103) ; pour modifier les valeurs de pixel (102) d'un pixel (101) déterminé de ladite image numérique (100) ledit procédé comprenant en outre les étapes suivantes :

- l'étape d'interpoler une valeur de paramètre relative audit pixel déterminé (603) à partir des valeurs de paramètre de ladite image régularisée des paramètres (507), relatives aux zones voisines dudit pixel déterminé,
- l'étape de calculer un coefficient (1104) en appliquant une fonction prédéterminée, notamment le gamma, à la valeur de paramètre (603) ainsi interpolée,
- l'étape de multiplier les valeurs de pixel (102) dudit pixel déterminé par ledit coefficient (1104).

**12.** Procédé selon l'une quelconque des revendications 1 à 9 ; deux valeurs de paramètre déterminées ayant été affectées à chaque zone, ci-après dénommées la première valeur de paramètre et la deuxième valeur de paramètre ; pour modifier les valeurs de pixel (102) d'un pixel (101) déterminé de ladite image numérique (100) ledit procédé comprenant en outre les étapes suivantes :

- l'étape d'interpoler une première valeur de paramètre relative audit pixel déterminé à partir desdites premières valeurs de paramètre de ladite image régularisée des paramètres (507), relatives aux zones voisines dudit pixel déterminé,
- l'étape d'interpoler une deuxième valeur de paramètre relative audit pixel déterminé à partir desdites deuxièmes valeurs de paramètre de ladite image régularisée des paramètres (507), relatives aux zones voisines dudit pixel déterminé,
- l'étape de choisir une transformation affine (1204) en fonction ladite première valeur de paramètre et ladite deuxième valeur de paramètre ainsi interpolées,
- l'étape d'appliquer ladite transformation affine (1204) à chacune des valeurs de pixel.

**13.** Procédé selon l'une quelconque des revendications 1 à 12 ; pour modifier les valeurs de pixel d'un pixel déterminé de ladite image numérique ledit procédé comprenant en outre les étapes suivantes :

- l'étape de calculer un coefficient en fonction des valeurs de paramètre de ladite image régularisée des paramètres et des valeurs de pixel,
- l'étape de calculer chaque valeur de pixel dudit pixel déterminé en fonction dudit coefficient et des dites valeurs de pixel dudit pixel déterminé.

**14.** Procédé selon l'une quelconque des revendications 1 à 13 ; pour modifier les valeurs de pixel d'un pixel déterminé de ladite image numérique ledit procédé comprenant en outre les étapes suivantes :

- l'étape de calculer un coefficient en fonction des valeurs de paramètre de ladite image régularisée des paramètres et des valeurs de pixel,
- l'étape de multiplier chaque valeur de pixel dudit pixel déterminé par ledit coefficient.

**15.** Procédé selon l'une quelconque des revendications 1 à 14 ; ledit procédé étant destiné à augmenter la luminosité des parties sombres (1002) de ladite image numérique ; ledit procédé étant en outre plus particulièrement à préserver la luminosité des parties sombres et de faible étendue de ladite image numérique ;
ledit procédé comprenant en outre l'étape de calculer les valeurs de paramètres déterminées des zones desdites parties sombres et de faibles étendues, à partir des valeurs de paramètres déterminées des zones voisines, de sorte que l'écart entre les valeurs de paramètres déterminées pour les zones concernées soit faibles.

**16.** Système pour modifier une image numérique (100) composée de pixels (101) ayant des valeurs de pixels (102); ladite image numérique (100) étant décomposée en zones Zi (103) ; chacun desdits pixels (101) étant associé à au moins une zone voisine ; au moins une valeur de zone (104) étant affectée à chacune desdites zones Zi (103) ; au moins une valeur de paramètre Vpij (203) étant affectée à chacune desdites zones Zi (103); un ensemble de couples (Zi ;Vpij), composés d'une zone Zi (103) et d'une valeur de paramètre Vpij (203) associée à ladite zone Zi (103), constituant une image des paramètres (201);
ledit système comprenant :

- a) un premier moyen de calcul (504) permettant de déterminer des valeurs de paramètre déterminées Vpir (305), notamment en fonction des valeurs de zone (104) de ladite image numérique (100), pour chaque zone (103) ; ladite image des paramètres ainsi constituée étant ci-après dénommée l'image des paramètres déterminée (505) ;
lesdites valeurs de zone (104) variant entre au moins une desdites zones et une zone contiguë, ladite variation étant ci-après dénommée la variation de l'image numérique (401);
lesdites valeurs de paramètre déterminées (305) variant entre ladite zone et au moins une zone contiguë, ladite variation étant ci-après dénommée la variation de l'image des paramètres déterminée;
ledit système comprenant en outre :

- b) un deuxième moyen de calcul (506) permettant de régulariser l'image des paramètres déterminée (505) en fonction de ladite variation de l'image numérique (401), en réduisant lesdites variations de l'image des paramètres déterminée pour produire une image des paramètres, ci-après dénommée image régularisée des paramètres (507), ayant un niveau de variation plus faible que celui desdites variations de l'image numérique (401);
- c) un troisième moyen de calcul (508) permettant de modifier les valeurs de pixel (102) d'un pixel (101) déterminé de ladite image numérique (100) en fonction des valeurs de paramètre de ladite image régularisée des paramètres (507), relatives aux zones voisines dudit pixel déterminé ;

de sorte que ladite image numérique est ainsi modifiée de manière différenciée pour chacun desdits pixels et de manière quasi régulière pour des zones contiguës.

**17.** Système selon la revendication 16 ; ledit système étant tel que chaque zone (103) est constituée par un pixel (101).

**18.** Système selon l'une quelconque des revendications 16 ou 17 ; ledit système étant tel que chaque zone (103) est constituée par un groupe de pixels (101) contigus.

**19.** Système selon l'une quelconque des revendications 16 à 18 ; lesdites valeurs de paramètre déterminées (305) étant lesdites valeurs de zone (104).

**20.** Système selon l'une quelconque des revendications 16 à 19 ; ladite valeur de zone (104) étant la valeur maximum des valeurs de pixels (102) associés à ladite zone et/ou la valeur minimale des valeurs de pixels (102) associés à ladite zone et/ou une valeur calculée à partir des valeurs de pixels (102) associés à ladite zone.

**21.** Système selon l'une quelconque des revendications 16 à 20 ; une seule valeur de paramètre déterminée (305) ayant été affectée à chaque zone (103) ; lesdites images de paramètre telles que leur niveau de variation soit plus faible que celui desdites variations de l'image numérique (401) étant ci-après dénommées les images à variation contrôlée ; pour réduire lesdites variations de l'image des paramètres déterminée (505) et produire une image régularisée des paramètres (507) ayant un niveau de variation plus faible que celui desdites variations de l'image numérique ledit système comprenant en outre :

- des premiers moyens de sélection (703) pour sélectionner parmi lesdites images à variation contrôlée une image des paramètres proche de l'image des paramètres déterminée (505) ;

de sorte qu'on obtient ainsi une image des paramètres constituant l'image régularisée des paramètres.

**22.** Système selon l'une quelconque des revendications 16 à 20; une seule valeur de paramètre déterminée (305) ayant été affectée à chaque zone (103) ;
lesdites images de paramètre telles que leur niveau de variation soit plus faible que celui desdites variations de l'image numérique étant ci-après dénommées les images à variation contrôlée ; pour réduire lesdites variations de l'image des paramètres déterminée (505) et produire une image régularisée des paramètres (507) ayant un niveau de variation plus faible que celui desdites variations de l'image numérique ledit système comprenant en outre :

- des deuxièmes moyens de sélection (703) pour sélectionner parmi lesdites images à variation contrôlée une image des paramètres c $Z_i$ ;$V_{pi}$ (c) qui satisfait aux conditions suivantes :

* la valeur de paramètre déterminée $V_{pij}$ de l'image des paramètres déterminée d'une zone ($Z_i$) quelconque est, au moins pour plusieurs zones, inférieure ou égale à ladite valeur de paramètre $V_{pi}$(c) de l'image des paramètres c sélectionnée,
* la valeur de paramètre $V_{pi}$(c) de l'image des paramètres c sélectionnée d'une zone ($Z_i$) est, au moins pour plusieurs zones, inférieure ou égale aux valeurs de paramètre $V_{pi}$(q) pour la plupart des images à variation contrôlée q $Z_i$ ;$V_{pi}$(q) ;

de sorte qu'on obtient ainsi une image des paramètres constituant l'image régularisée des paramètres.

**23.** Système selon l'une quelconque des revendications 16 à 20 ; une seule valeur de paramètre déterminée (203) ayant été affectée à chaque zone (103) ; lesdites images de paramètre telles que leur niveau de variation soit plus faible que celui desdites variations de l'image numérique étant ci-après dénommées les images à variation contrôlée ; pour réduire lesdites variations de l'image des paramètres déterminée (505) et produire une image régularisée des paramètres (507) ayant un niveau de variation plus faible que celui desdites variations de l'image numérique ledit système comprenant en outre :

- des troisièmes moyens de sélection (703) pour sélectionner parmi lesdites images à variation contrôlée une image des paramètres c $Z_i$ ;$V_{pi}$(c) qui satisfait aux conditions suivantes :

* la valeur de paramètre déterminée $V_{pij}$ de l'image des paramètres déterminée d'une zone ($Z_i$) quelconque est, au moins pour plusieurs zones, supérieure ou égale à ladite valeur de paramètre $V_{pi}$ (c) de l'image des paramètres c sélectionnée,
* la valeur de paramètre $V_{pi}$(c) de l'image des paramètres c sélectionnée d'une zone ($Z_i$) est, au moins pour plusieurs zones, supérieure ou égale aux valeurs de paramètre $V_{pi}$ (q) pour la plupart des images à variation contrôlée q $Z_i$ ;$V_{pi}$ (q) ;

de sorte qu'on obtient ainsi une image des paramètres constituant l'image régularisée des paramètres.

**24.** Système selon l'une quelconque des revendications 16 à 20 ; pour régulariser l'image des paramètres déterminée en fonction de ladite variation de l'image numérique, ledit système comportant un algorithme comprenant les étapes de calcul suivantes :

- l'étape de déterminer, pour une zone $Z_i$ définie, la valeur de paramètre $V_{pi}(n+1)$ dudit couple ($Z_i$ ;$V_{pi}(n+1)$) de la n+1-ieme image des paramètres en combinant :

* les valeurs des paramètres Vpj(n) et/ou Vpj(n+1) des couples de la n-ieme image et/ou de la n+1-ieme image dont les zones Zj sont situées dans le voisinage de ladite zone Zi, avec
* des valeurs correctives, fonctions des variations de l'image numérique entre ladite zone Zi et lesdites zones Zj,

- l'étape d'itérer de proche en proche la précédente étape ; ledit algorithme étant initialisé en l'appliquant la première fois aux couples de ladite image des paramètres déterminée.

**25.** Système selon l'une quelconque des revendications 16 à 24 ; ledit troisième moyen de calcul (508) pour modifier les valeurs de pixel d'un pixel déterminé de ladite image numérique exécutant les opérations suivantes :

- l'opération (602) d'interpoler une valeur de paramètre relative audit pixel déterminé à partir des valeurs de paramètre de ladite image régularisée des paramètres, relatives aux zones voisines dudit pixel déterminé,
- l'opération (604) de modifier la valeur dudit pixel déterminé en mettant en oeuvre la valeur de paramètre ainsi interpolée.

**26.** Système selon l'une quelconque des revendications 16 à 24 ; une seule valeur de paramètre déterminée ayant été affectée à chaque zone ; ledit troisième moyen de calcul (508) pour modifier les valeurs de pixel d'un pixel déterminé de ladite image numérique exécutant les opérations suivantes :

- l'opération d'interpoler (1100) une valeur de paramètre relative audit pixel déterminé à partir des valeurs de paramètre de ladite image régularisée des paramètres, relatives aux zones voisines dudit pixel déterminé,
- l'opération de calculer (1101) un coefficient en appliquant une fonction prédéterminée, notamment le gamma, à la valeur de paramètre ainsi interpolée,
- l'opération de multiplier (1102) les valeurs de pixel dudit pixel déterminé par ledit coefficient.

**27.** Système selon l'une quelconque des revendications 16 à 24 ; deux valeurs de paramètre déterminées ayant été affectées à chaque zone, ci-après dénommées la première valeur de paramètre et la deuxième valeur de paramètre ; ledit troisième moyen de calcul pour modifier les valeurs de pixel d'un pixel déterminé de ladite image numérique exécutant les opérations suivantes :

- l'opération consistant à interpoler une première valeur de paramètre relative audit pixel déterminé à partir desdites premières valeurs de paramètre de ladite image régularisée des paramètres, relatives aux zones voisines dudit pixel déterminé,
- l'opération consistant à interpoler une deuxième valeur de paramètre relative audit pixel déterminé à partir desdites deuxièmes valeurs de paramètre de ladite image régularisée des paramètres, relatives aux zones voisines dudit pixel déterminé,
- l'opération consistant à choisir une transformation affine en fonction ladite première valeur de paramètre et ladite deuxième valeur de paramètre ainsi interpolées,
- l'opération consistant à appliquer ladite transformation affine à chacune des valeurs de pixel.

**28.** Système selon l'une quelconque des revendications 16 à 27 ; ledit troisième moyen de calcul (508) pour modifier les valeurs de pixel d'un pixel déterminé de ladite image numérique exécutant les opérations suivantes :

- l'opération consistant à calculer un coefficient en fonction des valeurs de paramètre de ladite image régularisée des paramètres et des valeurs de pixel,
- l'opération consistant à calculer chaque valeur de pixel dudit pixel déterminé en fonction dudit coefficient et des dites valeurs de pixel dudit pixel déterminé.

**29.** Système selon l'une quelconque des revendications 16 à 28 ; ledit troisième moyen de calcul (508) pour modifier les valeurs de pixel d'un pixel déterminé de ladite image numérique exécutant les opérations suivantes :

- l'opération consistant à calculer un coefficient en fonction des valeurs de paramètre de ladite image régularisée des paramètres et des valeurs de pixel,
- l'opération consistant à multiplier chaque valeur de pixel dudit pixel déterminé par ledit coefficient.

**30.** Système selon l'une quelconque des revendications 16 à 29 ; ledit système étant destiné à augmenter la luminosité des parties sombres (1002) de ladite image numérique (100) ; ledit système étant en outre plus particulièrement à préserver la luminosité des parties sombres et de faible étendue de ladite image numérique (100) ;
ledit système comprenant en outre un quatrième moyen de calcul (902) pour calculer les valeurs de paramètres déterminées des zones desdites parties sombres et de faibles étendues, à partir des valeurs de paramètres déterminées des zones voisines, de sorte que l'écart entre les valeurs de paramètres déterminées pour les zones concernées soit faibles.

**Claims**

1. A method for modifying a digital image (100) composed of pixels having pixel values (102); the said digital image being decomposed into zones (103); each of the said pixels being associated with at least one adjacent zone (105); at least one zone value (104) being allocated to each of the said zones Zi (103); at least one parameter value Vpij (203) being allocated to each of the said zones Zi (103); a set of pairs (Zi; Vpij), composed of a zone Zi (103) and of a parameter value Vpij (203) associated with the said zone (103), constituting a parameter image (201); the method said including:

    - a) the stage of determining, for each zone (103), determined parameter values Vpir (305), in particular as a function of the zone values (104) of the said digital image (100); the said parameter image (201) formed in this way being referred to hereinafter as the determined parameter image (505);

    the said zone values (104) varying between at least one of the said zones (103) and a contiguous zone (403), the said variation being referred to hereinafter as the variation (401) of the digital image;
    the said determined parameter values (305) varying between the said zone (103) and at least one contiguous zone (403), the said variation being referred to hereinafter as the variation of the determined parameter image (402);
    the said method additionally including the following stages:

    - b) the stage of regularizing the determined parameter image (505) as a function of the said variation (401) of the digital image, by reducing the said variations of the determined parameter image (505) in order to produce a parameter image, referred to hereinafter as the regularized parameter image (507), having a smaller variation level than that of the said variations (401) of the digital image;
    - c) the stage of modifying the pixel values (102) of a determined pixel (101) of the said digital image (100) as a function of the parameter values (203) of the said regularized parameter image (507), relative to the zones adjacent to the said determined pixel;

    so that the digital image is modified differentially for each of the said pixels and quasi-regularly for the contiguous zones.

2. A method according to claim 1; the said method being such that each zone (103) is composed of one pixel (101).

3. A method according to any one of claims 1 or 2; the said method being such that each zone (103) is composed of a group of contiguous pixels (101).

4. A method according to any one of claims 1 to 3; the said determined parameter values (305) being the said zone values (104).

5. A method according to any one of claims 1 to 4; the said zone value (104) being the maximum value of the pixel values (102) associated with the said zone (103) and/or the minimum value of the pixel values (102) associated with the said zone (103) and/or a value calculated from the pixel values (102) associated with the said zone (103).

6. A method according to any one of claims 1 to 5; a single determined parameter value (305) having been allocated to each zone (103);
the said parameter images (201) whose variation level is smaller than that of the said variations of the digital image being referred to hereinafter as controlled variation images; the said method, in order to reduce the said variations of the determined parameter image and to produce a regularized parameter image (507) having a variation level smaller than that of the said variations of the digital image (100), additionally comprising:

    - the stage of selecting, from among the controlled variation images, a parameter image that is close to the determined parameter image (505);

so that there is obtained a parameter image constituting the regularized parameter image.

7. A method according to any one of claims 1 to 5; a single determined parameter value (305) having been allocated to each zone (103);

the said parameter images whose variation level is smaller than that of the said variations of the digital image being referred to hereinafter as controlled variation images; the said method, in order to reduce the said variations of the determined parameter image (505) and to produce a regularized parameter image (507) having a variation level smaller than that of the said variations of the digital image, additionally including:

- the stage of selecting, from among the controlled variation images, a parameter image c Zi; Vpi(c) that satisfies the following conditions:

* the determined parameter value Vpij of the determined parameter image of any zone (Zi) whatsoever is smaller than or equal to the said parameter value Vpi(c) of the selected parameter image c, at least for several zones,
* the parameter value Vpi(c) of the selected parameter image c of a zone (Zi) is smaller than or equal to the parameter values Vpi(q) for most of the controlled variation images q Zi; Vpi(q), at least for several zones;

so that there is obtained a parameter image constituting the regularized parameter image.

8. A method according to any one of claims 1 to 5; a single determined parameter value (305) having been allocated to each zone (103);

the said parameter images whose variation level is smaller than that of the said variations of the digital image being referred to hereinafter as controlled variation images; the said method, in order to reduce the said variations of the determined parameter image (505) and to produce a regularized parameter image (507) having a variation level smaller than that of the said variations of the digital image, additionally including:

- the stage of selecting, from among the said controlled variation images, a parameter image c Zi; Vpi(c) that satisfies the following conditions:

* the determined parameter value Vpij of the determined parameter image of any zone (Zi) whatsoever is larger than or equal to the said parameter value Vpi(c) of the selected parameter image c, at least for several zones,
* the parameter value Vpi(c) of the selected parameter image (c) of a zone (Zi) is larger than or equal to the parameter values Vpi(q) for most of the controlled variation images q Zi; Vpi(q), at least for several zones;

so that there is obtained a parameter image constituting the regularized parameter image.

9. A method according to any one of claims 1 to 5; the said method, in order to regularize the determined parameter image as a function of the said variation of the digital image, employing the algorithm that includes the following stages:

the stage of determining, for a defined zone Zi, the parameter value Vpi (n+1) of the said pair (Zi; Vpi (n+1)) of the n+1-th parameter image by combining:

* the parameter values Vpj (n) and/or VPj (n+1) of the pairs of the n-th image and/or of the n+1-th image whose zones Zj are situated in the vicinity 106 of the said zone Zi with
* corrective values that are functions of the variations of the digital image between the said zone Zi and the said zones Zj,

        - the stage of iterating the preceding stage step by step;

the said algorithm being initialized by applying it at first to the pairs of the said determined parameter image.

10. A method according to any one of claims 1 to 9; the said method, in order to modify the pixel values (102) of a determined pixel (101) of the digital image (100), additionally including the following stages:

- the stage of interpolating a parameter value relative to the said determined pixel (603) from parameter values of the said regularized parameter image (507), relative to the zones adjacent to the said determined pixel,

- the stage of modifying the value of the said determined pixel by employing the parameter value (603) interpolated in this way.

11. A method according to any one of claims 1 to 9; a single determined parameter value (305) having been allocated to each zone (103), the said method, in order to modify the pixel values (102) of a determined pixel (101) of the said digital image (100), additionally including the following stages:

   - the stage of interpolating a parameter value relative to the said determined pixel (603) from parameter values of the said regularized parameter image (507), relative to the zones adjacent to the said determined pixel,
   - the stage of calculating a coefficient (1104) by applying a predetermined function, especially the gamma, to the parameter value (603) interpolated in this way,
   - the stage of multiplying the pixel values (102) of the said determined pixel by the said coefficient (1104).

12. A method according to any one of claims 1 to 9; two determined parameter values having been allocated to each zone, referred to hereinafter as the first parameter value and the second parameter value; the said method, in order to modify the pixel values (102) of a determined pixel (101) of the said digital image (100), additionally including the following stages:

   - the stage of interpolating a first parameter value relative to the said determined pixel from the said first parameter values of the said regularized parameter image (507), relative to the zones adjacent to the said determined pixel,
   - the stage of interpolating a second parameter value relative to the said determined pixel from the said second parameter values of the said regularized parameter image (507), relative to the zones adjacent to the said determined pixel,
   - the stage of choosing an affine transformation (1204) as a function of the said first parameter value and the said second parameter value interpolated in this way,
   - the stage of applying the said affine transformation (1204) to each of the pixel values.

13. A method according to any one of claims 1 to 12; the said method, in order to modify the pixel values of a determined pixel of the said digital image, additionally including the following stages:

   - the stage of calculating a coefficient as a function of the parameter values of the said regularized parameter image and of the pixel values,
   - the stage of calculating each pixel value of the said determined pixel as a function of the said coefficient and of the said pixel values of the said determined pixel.

14. A method according to any one of claims 1 to 13; the said method, in order to modify the pixel values of a determined pixel of the said digital image, additionally including the following stages:

   - the stage of calculating a coefficient as a function of the parameter values of the said regularized parameter image and of the pixel values,
   - the stage of multiplying each pixel value of the said determined pixel by the said coefficient.

15. A method according to any one of claims 1 to 14; the said method being intended to augment the luminosity of the dark parts (1002) of the said digital image; the said method being additionally more particularly to preserve the luminosity of those parts of the said digital image that are dark and of small extent;
   the said method additionally including the stage of calculating the determined parameter values of the zones of the said parts that are dark and of small extent, from the determined parameter values of the adjacent zones, so that the difference between the determined parameter values for the zones in question is small.

16. A system for modifying a digital image (100) composed of pixels (101) having pixel values (102); the said digital image (100) being decomposed into zones Zi (103); each of the said pixels (101) being associated with at least one adjacent zone; at least one zone value (104) being allocated to each of the said zones Zi (103); at least one parameter value Vpij (203) being allocated to each of the said zones Zi (103); a set of pairs (Zi; Vpij), composed of a zone Zi (103) and of a parameter value Vpij (203) associated with the said zone Zi (103), constituting a parameter image (201); the said system including:

   - a) a first calculating means (504) making it possible to determine, for each zone (103), determined parameter values Vpir (305), in particular as a function of the zone values (104) of the said digital image (100); the said

EP 1 673 728 B1

parameter image formed in this way being referred to hereinafter as the determined parameter image (505);

the said zone values (104) varying between at least one of the said zones and a contiguous zone, the said variation being referred to hereinafter as the variation (401) of the digital image;
the said determined parameter values (305) varying between the said zone and at least one contiguous zone, the said variation being referred to hereinafter as the variation of the determined parameter image;
the said system additionally including :

- b) a second calculation means (506) making it possible to regularize the determined parameter image (505) as a function of the said variation (401) of the digital image, by reducing the said variations of the determined parameter image in order to produce a parameter image referred to hereinafter as the regularized parameter image (507) having a smaller variation level than that of the said variations (401) of the digital image;
- c) a third calculating means (508) making it possible to modify the pixel values (102) of a determined pixel (101) of the said digital image (100) as a function of the parameter values of the said regularized parameter image (507), relative to the zones adjacent to the said determined pixel;

so that the said digital image is modified differentially for each of the said pixels and quasi-regularly for the contiguous zones.

17. A system according to claim 16; the said system being such that each zone (103) is composed of one pixel (101).

18. A system according to any one of claims 16 or 17; the said system being such that each zone (103) is composed of a group of contiguous pixels (101).

19. A system according to any one of claims 16 to 18; the said determined parameter values (305) being the said zone values (104).

20. A system according to any one of claims 16 to 19; the said zone value (104) being the maximum value of the pixel values (102) associated with the said zone and/or the minimum value of the pixel values (102) associated with the said zone (103) and/or a value calculated from the pixel values (102) associated with the said zone.

21. A system according to any one of claims 16 to 20; a single determined parameter value (305) having been allocated to each zone (103);
the said parameter images whose variation level is smaller than that of the said variations (401) of the digital image being referred to hereinafter as controlled variation images; the said system, in order to reduce the said variations of the determined parameter image (505) and to produce a regularized parameter image (507) having a variation level smaller than that of the said variations of the digital image, additionally comprising:

- first selection means (703) for selecting, from among the said controlled variation images, a parameter image close to the determined parameter image (505);

so that there is obtained a parameter image constituting the regularized parameter image.

22. A system according to any one of claims 16 to 20; a single determined parameter value (305) having been allocated to each zone (103);
the said parameter images whose variation level is smaller than that of the said variations of the digital image being referred to hereinafter as controlled variation images; the said system, in order to reduce the said variations of the determined parameter image (505) and to produce a regularized parameter image (507) having a variation level smaller than that of the said variations of the digital image, additionally including:

- second selecting means (703) for selecting, from among the said controlled variation images, a parameter image c Zi; Vpi(c) that satisfies the following conditions:

    * the determined parameter value Vpij of the determined parameter image of any zone (Zi) whatsoever is smaller than or equal to the said parameter value Vpi(c) of the selected parameter image c, at least for several zones,
    * the parameter value Vpi(c) of the selected parameter image (c) of a zone (Zi) is smaller than or equal to the parameter values (Vpi(q) for most of the controlled variation images q Zi; Vpi(q), at least for several zones;

34

so that there is obtained a parameter image constituting the regularized parameter image.

23. A system according to any one of claims 16 to 20; a single determined parameter value (203) having been allocated to each zone (103);

the said parameter images whose variation level is smaller than that of the said variations of the digital image being referred to hereinafter as controlled variation images; the said system, in order to reduce the said variations of the determined parameter image (505) and to produce a regularized parameter image (507) having a variation level smaller than that of the said variations of the digital image, additionally including:

- third selecting means (703) for selecting, from among the said controlled variation images, a parameter image c Zi; Vpi(c) that satisfies the following conditions:

* the determined parameter value Vpij of the determined parameter image of any zone (Zi) whatsoever is larger than or equal to the said parameter value Vpi(c) of the selected parameter image c, at least for several zones,
* the parameter value Vpi(c) of the selected parameter image c of a zone (Zi) is larger than or equal to the parameter values Vpi(q) for most of the controlled variation images q Zi; Vpi(q)s, at least for several zones;

so that there is obtained a parameter image constituting the regularized parameter image.

24. A system according to any one of claims 16 to 20; the said system, in order to regularize the determined parameter image as a function of the said variation of the digital image, employing an algorithm that includes the following stages of calculation:

the stage of determining, for a defined zone Zi, the parameter value Vpi(n+1) of the said pair (Zi; Vpi(n+1)) of the n+1-th parameter image by combining:

* the parameter values Vpj (n) and/or Vpj (n+1) of the pairs of the n-th image and/or of the n+1-th image whose zones Zj are situated in the vicinity of the said zone Zi with
* corrective values that are functions of the variations of the digital image between the said zone Zi and the said zones Zj,

- the stage of iterating the preceding stage step by step;

the said algorithm being initialized by applying it at first to the pairs of the determined parameter image.

25. A system according to any one of claims 16 to 24; the said third calculating means (508), in order to modify the pixel values of a determined pixel of the said digital image, executing the following operations:

- the operation (602) of interpolating a parameter value relative to the said determined pixel from parameter values of the said regularized parameter image, relative to the zones adjacent to the said determined pixel,
- the operation (604) of modifying the value of the said determined pixel by employing the parameter value interpolated in this way.

26. A system according to any one of claims 16 to 24; a single determined parameter value having been allocated to each zone; the said third calculating means (508), in order to modify the pixel values of a determined pixel of the said digital image, executing the following operations:

- the operation (1100) of interpolating a parameter value relative to the said determined pixel from parameter values of the said regularized parameter image, relative to the zones adjacent to the said determined pixel,
- the operation (1101) of calculating a coefficient by applying a predetermined function, especially the gamma, to the parameter value interpolated in this way,
- the operation (1102) of multiplying the pixel values of the said determined pixel by the said coefficient.

27. A system according to any one of claims 16 to 24; two determined parameter values having been allocated to each zone, referred to hereinafter as the first parameter value and the second parameter value; the said third calculating means, in order to modify the pixel values of a determined pixel of the said digital image, executing the following operations:

- the operation comprising interpolating a first parameter value relative to the said determined pixel from the said first parameter values of the said regularized parameter image, relative to the zones adjacent to the said determined pixel,
- the operation comprising interpolating a second parameter value relative to the said determined pixel from the said second parameter values of the said regularized parameter image, relative to the zones adjacent to the said determined pixel,
- the operation consisting in choosing an affine transformation as a function of the said first parameter value and the said second parameter value interpolated in this way,
- the operation consisting in applying the said affine transformation to each of the pixel values.

28. A system according to any one of claims 16 to 27; the said third calculating means (508), in order to modify the pixel values of a determined pixel of the said digital image, executing the following operations:

- the operation consisting in calculating a coefficient as a function of the parameter values of the said regularized parameter image and of the pixel values,
- the operation consisting in calculating each pixel value of the said determined pixel as a function of the said coefficient and of the said pixel values of the said determined pixel.

29. A system according to any one of claims 16 to 28; the said third calculating means (508), in order to modify the pixel values of a determined pixel of the said digital image, executing the following operations:

- the operation consisting in calculating a coefficient as a function of the parameter values of the said regularized parameter image and of the pixel values,
- the operation consisting in multiplying each pixel value of the said determined pixel by the said coefficient.

30. A system according to any one of claims 16 to 29; the said system being intended to augment the luminosity of the dark parts (1002) of the said digital image (100); the said system being additionally more particularly to preserve the luminosity of those parts of the said digital image (100) that are dark and of small extent; the said system additionally including a fourth calculating means (902) for calculating the determined parameter values of the zones of the said parts that are dark and of small extent, from the determined parameter values of the adjacent zones, so that the difference between the determined parameter values for the zones in question is small.

**Patentansprüche**

1. Verfahren zum Ändern eines digitalen Bildes (100) bestehend aus Bildpunkten, die wiederum Bildpunktwerte (102) aufweisen; das besagte digitale Bild wird dabei in Zonen (103) aufgeteilt; jeder der besagten Bildpunkte wird dabei zumindest einer benachbarten Zone (105) zugeordnet; zumindest ein Zonenwert (104) wird dabei jeder der besagten Zonen Zi (103) zugeordnet; zumindest ein Parameterwert Vpij (203) wird jeder der besagten Zonen Zi (103) zugeordnet; eine Gruppe von Paaren (Zi; Vpij), bestehend aus einer Zone Zi (103) und einem Parameterwert Vpij (203), der der besagten Zone (103) zugeordnet ist, bilden so ein Parameterbild (201); das besagte Verfahren enthält:

a) den Schritt zur Bestimmung der bestimmten Parameterwerte Vpir (305), speziell in Abhängigkeit der Zonenwerte (104) des besagten digitalen Bildes (100), für jede Zone (103); das besagte Parameterbild (201), das auf diese Weise gebildet wird, wird nachfolgend bestimmtes Parameterbild (505) genannt; die besagten Zonenwerte (104) variieren dabei zwischen zumindest einer der besagten Zonen (103) und einer angrenzenden Zone (403), wobei die besagte Variation nachfolgend die Variation des digitalen Bildes (104) genannt wird; die besagten bestimmten Parameterwerte (305) variieren dabei zwischen der besagten Zone (103) und zumindest einer angrenzenden Zone (403), wobei die besagte Variation nachfolgend die Variation des bestimmten Parameterbildes (402) genannt wird; das besagte Verfahren enthält darüber hinaus die folgenden Schritte:

- b) den Regulierungsschritt des bestimmten Parameterbildes (505), je nach besagter Variation des digitalen Bildes (401) durch die Verringerung der besagten Variationen des bestimmten Parameterbildes (505) zur Erstellung eines Parameterbildes, das nachfolgend reguliertes Parameterbild (507) genannt wird, mit einem geringeren Variationsniveau als jenem der besagten Variationen des digitalen Bildes (401);

- c) den Schritt zur Änderung der Bildpunktwerte (102) eines bestimmten Bildpunktes (101) des besagten digitalen Bildes (100) in Abhängigkeit von den Parameterwerten (203) des besagten regulierten Parameterbildes (507), im Verhältnis zu den benachbarten Zonen des besagten bestimmten Bildpunktes;

sodass das besagte digitale Bild auf diese Weise differenziert für jeden der besagten Bildpunkte und quasi regelmäßig für die angrenzenden Zonen verändert wird.

2. Verfahren nach Anspruch 1; das besagte Verfahren ist dabei so ausgelegt, dass jede Zone (103) durch einen Bildpunkt (101) gebildet wird.

3. Verfahren nach irgendeinem der Ansprüche 1 oder 2; das besagte Verfahre ist dabei so ausgelegt, dass jede Zone (103) durch eine Gruppe angrenzender Bildpunkte (101) gebildet wird.

4. Verfahren nach irgendeinem der Ansprüche 1 bis 3; die besagten bestimmten Parameterwerte (305) sind die besagten Zonenwerte (104).

5. Verfahren nach irgendeinem der Ansprüche 1 bis 4; der besagte Zonenwert (104) ist dabei der Höchstwert der Bildpunktwerte (102), die der besagten Zone (103) zugeordnet werden und oder der Mindestwert der Bildpunktwerte (102), die der besagten Zone (103) zugeordnet werden, und oder ein Wert, der ausgehend von den Bildpunktwerten (102), die der besagten Zone (103) zugeordnet werden, errechnet wird.

6. Verfahren nach irgendeinem der Ansprüche 1 bis 5; ein einziger bestimmter Parameterwert (305) wird einer jeden Zone (103) zugeordnet;
solche besagten Parameterbilder (201) deren Variationsniveau unter jenem der besagten Variationen des digitalen Bildes liegt, werden nachfolgend Bilder mit kontrollierter Variation genannt; zur Einschränkung der besagten Variationen des bestimmten Parameterbildes (505) und zur Erstellung eines regulierten Parameterbildes (507) mit einem Variationsniveau, das unter jenem der besagten Variationen des digitalen Bildes (100) liegt, enthält das Verfahren darüber hinaus:

- den Schritt zur Auswahl unter den besagten Bildern mit kontrollierter Variation eines Parameterbildes, das dem bestimmten Parameterbild (505) nahe liegt;

sodass man auf diese Weise ein Parameterbild erhält, das das regulierte Parameterbild bildet.

7. Verfahren nach irgendeinem der Ansprüche 1 bis 5; ein einziger bestimmter Parameterwert (305) wird jeder Zone (103) zugeordnet;
solche besagten Parameterbilder, deren Variationsniveau unter jenem der besagten Variationen des digitalen Bildes liegt, werden nachfolgend Bilder mit kontrollierter Variation genannt; zur Einschränkung der besagten Variationen des bestimmten Parameterbildes (505) und zur Erstellung eines regulierten Parameterbildes (507) mit einem Variationsniveau, das unter jenem der besagten Variationen des digitalen Bildes liegt, enthält das Verfahren darüber hinaus:

- den Schritt zur Auswahl unter den besagten Bildern mit kontrollierter Variation eines Parameterbildes $c$ $Z_i$; $V_{pi}(c)$, das folgende Bedingungen erfüllt:

* der bestimmte Parameterwert $V_{pij}$ des bestimmten Parameterbildes irgendeiner Zone ($Z_i$) ist, zumindest für mehrere Zonen, kleiner oder gleich dem besagten Parameterwert $V_{pi}(c)$ des ausgewählten Parameterbildes $c$ ,
* der Parameterwert $V_{pi}(c)$ des ausgewählten Parameterbildes $c$ einer Zone ($Z_i$) ist, zumindest für mehrere Zonen, kleiner oder gleich den Parameterwerten $V_{pi}(q)$ für die meisten Bilder mit kontrollierter Variation $q$ $Z_i$; $V_{pi}(q)$ ;

sodass man auf diese Weise ein Parameterbild erhält, das das regulierte Parameterbild bildet.

8. Verfahren nach irgendeinem der Ansprüche 1 bis 5; ein einziger bestimmter Parameterwert (305) wird jeder Zone (103) zugeordnet;
solche besagten Parameterbilder, deren Variationsniveau unter jenem der besagten Variationen des digitalen Bildes liegt, werden nachfolgend Bilder mit kontrollierter Variation genannt; zur Einschränkung der besagten Variationen des bestimmten Parameterbildes (505) und zur Erstellung eines regulierten Parameterbildes (507) mit einem Variationsniveau, das unter jenem der besagten Variationen des digitalen Bildes liegt, enthält das Verfahren darüber hinaus:

- den Schritt zur Auswahl unter den besagten Bildern mit kontrollierter Variation eines Parameterbildes c Zi; Vpi(c), das folgende Bedingungen erfüllt:

* der bestimmte Parameterwert Vpij des bestimmten Parameterbildes irgendeiner Zone (Zi) ist, zumindest für mehrere Zonen, größer oder gleich dem besagten Parameterwert Vpi(c) des ausgewählten Parameterbildes c ,
* der Parameterwert Vpi(c) des ausgewählten Parameterbildes c einer Zone (Zi) ist, zumindest für mehrere Zonen, größer oder gleich den Parameterwerten Vpi(q) für die meisten Bilder mit kontrollierter Variation q Zi; Vpi(q) ;

sodass man auf diese Weise ein Parameterbild erhält, das das regulierte Parameterbild bildet.

9. Verfahren nach irgendeinem der Ansprüche 1 bis 5; zum Regulieren des bestimmten Parameterbildes in Abhängigkeit von der besagten Variation des digitalen Bildes, wendet das besagte Verfahren einen Algorithmus an, der die folgenden Schritte enthält:

- den Schritt zur Bestimmung, für eine definierte Zone Zi, des Parameterwertes Vpi(n+1) des besagten Paares (Zi; Vpi (n+1)) des (n+1). Parameterbildes durch Kombinieren:

* der Parameterwerte Vpj(n) und/oder Vpj(n+1) der Paare des n. Bildes und/oder des (n+1). Bildes deren Zonen Zj, die sich in der Nachbarschaft 106 der besagten Zone Zi befinden, mit
* Korrekturwerten, Funktionen der Variationen des digitalen Bildes zwischen der Zone Zi und den besagten Zonen Zj,

- den Schritt der annähernden Fortsetzung des vorhergehenden Schrittes;

der besagte Algorithmus wird dabei durch die erste Anwendung des besagten bestimmten Parameterbildes auf die Paare zurückgesetzt.

10. Verfahren nach irgendeinem der Ansprüche 1 bis 9; zum Ändern der Bildpunktwerte (102) eines bestimmten Bildpunktes (101) des besagten digitalen Bildes (100) enthält das besagte Verfahren darüber hinaus die folgenden Schritte:

- den Schritt der Interpolierung eines Parameterwertes im Verhältnis zum besagten bestimmten Bildpunkt (603) ausgehend von Parameterwerten des besagten regulierten Parameterbildes (507), im Verhältnis zu den benachbarten Zonen des bestimmten Bildpunktes,
- den Schritt der Änderung des Wertes des besagten bestimmten Bildpunktes durch Anwendung des Parameterwertes (603), der auf diese Weise interpoliert wurde.

11. Verfahren nach irgendeinem der Ansprüche 1 bis 9; ein einziger bestimmter Parameterwert (305) wird jeder Zone (103) zugeordnet; zum Ändern der Bildpunktwerte (102) eines bestimmten Bildpunktes (101) des besagten digitalen Bildes (100), enthält das besagte Verfahren darüber hinaus die folgenden Schritte:

- den Schritt der Interpolierung eines Parameterwertes im Verhältnis zum besagten bestimmten Bildpunkt (603) ausgehend von den Parameterwerten des besagten regulierten Parameterbildes (507), im Verhältnis zu den benachbarten Zonen des besagten bestimmten Bildpunktes,
- den Schritt der Berechnung eines Koeffizienten (1104) durch Anwendung einer vorbestimmten Funktion, speziell von Gamma, auf den so interpolierten Parameterwert (603),
- den Schritt der Multiplikation der Bildpunktwerte (102) des besagten bestimmten Bildpunktes mit dem besagten Koeffizienten (1104).

12. Verfahren nach irgendeinem der Ansprüche 1 bis 9; zwei bestimmte Parameterwerte wurden jeder Zone zugeordnet, die nachfolgend der erste Parameterwert und der zweite Parameterwert genannt werden; zum Ändern der Bildpunktwerte (102) eines bestimmten Bildpunktes (101) des besagten digitalen Bildes (100), enthält das besagte Verfahren darüber hinaus die folgenden Schritte:

- den Schritt der Interpolierung eines ersten Parameterwertes im Verhältnis zum besagten bestimmten Bildpunkt, ausgehend von den Parameterwerten des besagten regulierten Parameterbildes (507), im Verhältnis zu den benachbarten Zonen des besagten bestimmten Bildpunktes,
- den Schritt der Interpolierung eines zweiten Parameterwertes im Verhältnis zum besagten bestimmten Bildpunkt, ausgehend von den Parameterwerten des besagten regulierten Parameterbildes (507), im Verhältnis zu den benachbarten Zonen des besagten bestimmten Bildpunktes,
- den Schritt der Auswahl einer verfeinerten Umwandlung (1204) in Abhängigkeit vom besagten ersten Parameterwert und vom zweiten Parameterwert, die auf diese Weise interpoliert wurden,
- den Schritt der Anwendung der besagten verfeinerten Umwandlung (1204) auf jeden der Bildpunktwerte.

13. Verfahren nach irgendeinem der Ansprüche 1 bis 12; zum Ändern der Bildpunktwerte eines bestimmten Bildpunktes des besagten digitalen Bildes, enthält das besagte Verfahren darüber hinaus die folgenden Schritte:

- den Schritt der Berechnung eines Koeffizienten in Abhängigkeit von den Parameterwerten des besagten regulierten Parameterbildes und der besagten Bildpunktwerte,
- den Schritt der Berechnung jedes Bildpunktwertes des besagten bestimmten Bildpunktes in Abhängigkeit vom besagten Koeffizienten und den besagten Bildpunktwerten des besagten bestimmten Bildpunktes.

14. Verfahren nach irgendeinem der Ansprüche 1 bis 13; zum Ändern der Bildpunktwerte eines bestimmten Bildpunktes des besagten digitalen Bildes enthält das besagte Verfahren darüber hinaus die folgenden Schritte:

- den Schritt der Berechnung eines Koeffizienten in Abhängigkeit von den Parameterwerten des besagten regulierten Parameterbildes und der besagten Bildpunktwerte,
- den Schritt der Multiplikation jedes Bildpunktwertes des besagten bestimmten Bildpunktes mit dem besagten Koeffizienten.

15. Verfahren nach irgendeinem der Ansprüche 1 bis 14; das besagte Verfahren ist dazu bestimmt, die Helligkeit der dunklen Abschnitte (1002) des besagten digitalen Bildes zu erhöhen; das besagte Verfahren ist darüber hinaus dazu bestimmt, die Helligkeit der dunklen Stellen geringer Ausdehnung des besagten digitalen Bildes zu erhalten; das besagte Verfahren enthält darüber hinaus den Schritt der Berechnung der bestimmten Parameterwerte der Zonen der besagten dunklen Stellen geringer Ausdehnung ausgehend von den bestimmten Parameterwerten der benachbarten Zonen, sodass die Abweichung zwischen den bestimmten Parameterwerten für die bestimmten Zonen gering ist.

16. System zum Ändern eines digitalen Bildes (100) bestehend aus Bildpunkten, die wiederum Bildpunktwerte (102) aufweisen; das besagte digitale Bild wird dabei in Zonen Zi (103) aufgeteilt; jeder der besagten Bildpunkte wird dabei zumindest einer benachbarten Zone (105) zugeordnet; zumindest ein Zonenwert (104) wird dabei jeder der besagten Zonen Zi (103) zugeordnet; zumindest ein Parameterwert Vpij (203) wird jeder der besagten Zonen Zi (103) zugeordnet; eine Gruppe von Paaren (Zi; Vpij), bestehend aus einer Zone Zi (103) und einem Parameterwert Vpij (203), der der besagten Zone (103) zugeordnet ist, bilden so ein Parameterbild (201); das besagte System enthält:

a) ein erstes Berechnungssystem (504) zur Bestimmung von bestimmten Parameterwerten Vpir (305), speziell in Abhängigkeit der Zonenwerte (104) des besagten digitalen Bildes (100), für jede Zone (103); das besagte Parameterbild, das auf diese Weise gebildet wird, wird nachfolgend bestimmtes Parameterbild (505) genannt; die besagten Zonenwerte (104) variieren dabei zwischen zumindest einer der besagten Zonen und einer angrenzenden Zone, wobei die besagte Variation nachfolgend die Variation des digitalen Bildes (104) genannt wird; die besagten bestimmten Parameterwerte (305) variieren dabei zwischen der besagten Zone und zumindest einer angrenzenden Zone, wobei die besagte Variation nachfolgend die Variation des bestimmten Parameterbildes genannt wird; das besagte System enthält darüber hinaus:

- b) ein zweites Berechnungssystem (506) zur Bestimmung des bestimmten Parameterbildes (505), je nach besagter Variation des digitalen Bildes (401) durch die Verringerung der besagten Variationen des bestimmten Parameterbildes zur Erstellung eines Parameterbildes, das nachfolgend reguliertes Parameterbild (507) genannt wird, mit einem geringeren Variationsniveau als jenem der besagten Variationen des digitalen Bildes (401);

- c) ein drittes Berechnungssystem (508) zur Änderung der Bildpunktwerte (102) eines bestimmten Bildpunktes (101) des besagten digitalen Bildes (100) in Abhängigkeit von den Parameterwerten des besagten regulierten Parameterbildes (507), im Verhältnis zu den angrenzenden Zonen des besagten bestimmten Bildpunktes;

sodass das besagte digitale Bild auf diese Weise differenziert für jeden der besagten Bildpunkte und quasi regelmäßig für die angrenzenden Zonen verändert wird.

17. System nach Anspruch 16; das besagte System ist dabei so ausgelegt, dass jede Zone (103) durch einen Bildpunkt (101) gebildet wird.

18. System nach irgendeinem der Systeme 16 oder 17; das besagte System ist dabei so ausgelegt, dass jede Zone (103) durch eine Gruppe angrenzender Bildpunkte (101) gebildet wird.

19. System nach irgendeinem der Ansprüche 16 bis 18; die besagten bestimmten Parameterwerte (305) sind die besagten Zonenwerte (104).

20. System nach irgendeinem der Ansprüche 16 bis 19; der besagte Zonenwert (104) ist dabei der Höchstwert der Bildpunktwerte (102), die der besagten Zone (103) zugeordnet werden und oder der Mindestwert der Bildpunktwerte (102), die der besagten Zone (103) zugeordnet werden, und oder ein Wert, der ausgehend von den Bildpunktwerten (102), die der besagten Zone zugeordnet werden, errechnet wird.

21. System nach irgendeinem der Ansprüche 16 bis 20; ein einziger bestimmter Parameterwert (305) wird jeder Zone (103) zugeordnet;
solche besagten Parameterbilder deren Variationsniveau unter jenem der besagten Variationen des digitalen Bildes (401) liegt, werden nachfolgend Bilder mit kontrollierter Variation genannt; zur Einschränkung der besagten Variationen des bestimmten Parameterbildes (505) und zur Erstellung eines regulierten Parameterbildes (507) mit einem Variationsniveau, das unter jenem der besagten Variationen des digitalen Bildes liegt, enthält das System darüber hinaus:

- die ersten Systeme zur Auswahl (703) unter den besagten Bildern mit kontrollierter Variation eines Parameterbildes, das dem bestimmten Parameterbild (505) nahe kommt;

sodass man auf diese Weise ein Parameterbild erhält, das das regulierte Parameterbild bildet.

22. System nach irgendeinem der Ansprüche 16 bis 20; ein einziger bestimmter Parameterwert (305) wird jeder Zone (103) zugeordnet;
solche besagten Parameterbilder, deren Variationsniveau unter jenem der besagten Variationen des digitalen Bildes liegt, werden nachfolgend Bilder mit kontrollierter Variation genannt; zur Einschränkung der besagten Variationen des bestimmten Parameterbildes (505) und zur Erstellung eines regulierten Parameterbildes (507) mit einem Variationsniveau, das unter jenem der besagten Variationen des digitalen Bildes liegt, enthält das System darüber hinaus:

- zweite Systeme zur Auswahl (703) unter den besagten Bildern mit kontrollierter Variation eines Parameterbildes c $Z_i$; $V_{pi}(c)$, das folgende Bedingungen erfüllt:

* der bestimmte Parameterwert $V_{pij}$ des bestimmten Parameterbildes irgendeiner Zone ($Z_i$) ist, zumindest für mehrere Zonen, kleiner oder gleich dem besagten Parameterwert $V_{pi}(c)$ des ausgewählten Parameterbildes c ,
* der Parameterwert $V_{pi}(c)$ des ausgewählten Parameterbildes c einer Zone ($Z_i$) ist, zumindest für mehrere Zonen, kleiner oder gleich den Parameterwerten $V_{pi}(q)$ für die meisten Bilder mit kontrollierter Variation q $Z_i$; $V_{pi}(q)$ ;

sodass man auf diese Weise ein Parameterbild erhält, das das regulierte Parameterbild bildet.

23. System nach irgendeinem der Ansprüche 16 bis 20; ein einziger bestimmter Parameterwert (203) wird jeder Zone (103) zugeordnet;

40

solche besagten Parameterbilder, deren Variationsniveau unter jenem der besagten Variationen des digitalen Bildes liegt, werden nachfolgend Bilder mit kontrollierter Variation genannt; zur Einschränkung der besagten Variationen des bestimmten Parameterbildes (505) und zur Erstellung eines regulierten Parameterbildes (507) mit einem Variationsniveau, das unter jenem der besagten Variationen des digitalen Bildes liegt, enthält das Verfahren darüber hinaus:

- dritte Systeme zur Auswahl (703) unter den besagten Bildern mit kontrollierter Variation eines Parameterbildes c Zi; Vpi(c), das folgende Bedingungen erfüllt:

* der bestimmte Parameterwert Vpij des bestimmten Parameterbildes irgendeiner Zone (Zi) ist, zumindest für mehrere Zonen, größer oder gleich dem besagten Parameterwert Vpi(c) des ausgewählten Parameterbildes c ,
* der Parameterwert Vpi(c) des ausgewählten Parameterbildes c einer Zone (Zi) ist, zumindest für mehrere Zonen, größer oder gleich den Parameterwerten Vpi(q) für die meisten Bilder mit kontrollierter Variation q Zi ; Vpi(q) ;

sodass man auf diese Weise ein Parameterbild erhält, das das regulierte Parameterbild bildet.

**24.** System nach irgendeinem der Ansprüche 16 bis 20; zum Regulieren des bestimmten Parameterbildes in Abhängigkeit von der besagten Variation des digitalen Bildes, wendet das besagte System einen Algorithmus an, der die folgenden Berechnungsschritte enthält:

- den Schritt zur Bestimmung, für eine definierte Zone Zi, des Parameterwertes Vpi(n+1) des besagten Paares (Zi; Vpi (n+1)) des (n+1). Parameterbildes durch Kombinieren:

* der Parameterwerte Vpj (n) und oder Vpj(n+1) der Paare des n. Bildes und oder des (n+1). Bildes deren Zonen Zj sich in der Nachbarschaft der besagten Zone Zi befinden, mit
* Korrekturwerten, Funktionen der Variationen des digitalen Bildes zwischen der Zone Zi und den besagten Zonen Zj,

- den Schritt der annähernden Fortsetzung des vorhergehenden Schrittes;

der besagte Algorithmus wird dabei durch die erste Anwendung des besagten bestimmten Parameterbildes auf die Paare zurückgesetzt.

**25.** System nach irgendeinem der Ansprüche 16 bis 24; das besagte dritte Berechnungssystem (508) zum Ändern der Bildpunktwerte eines bestimmten Bildpunktes des besagten digitalen Bildes führt folgende Operationen aus:

- die Operation (602) der Interpolierung eines Parameterwertes im Verhältnis zum besagten bestimmten Bildpunkt, ausgehend von Parameterwerten des besagten regulierten Parameterbildes, im Verhältnis zu den benachbarten Zonen des bestimmten Bildpunktes,
- die Operation (604) der Änderung des Wertes des besagten bestimmten Bildpunktes durch Anwendung des Parameterwertes der auf diese Weise interpoliert wurde.

**26.** System nach irgendeinem der Ansprüche 16 bis 24; ein einziger bestimmter Parameterwert wird jeder Zone zugeordnet; das besagte dritte Berechnungssystem (508) zum Ändern der Bildpunktwerte eines bestimmten Bildpunktes des besagten digitalen Bildes führt folgende Operationen aus:

- die Operation der Interpolierung (1100) eines Parameterwertes im Verhältnis zum besagten bestimmten Bildpunkt, ausgehend von den Parameterwerten des besagten regulierten Parameterbildes, im Verhältnis zu den benachbarten Zonen des besagten bestimmten Bildpunktes,
- die Operation der Berechnung (1101) eines Koeffizienten durch Anwendung einer vorbestimmten Funktion, speziell von Gamma, auf den so interpolierten Parameterwert,
- die Operation der Multiplikation (1102) der Bildpunktwerte des besagten bestimmten Bildpunktes mit dem besagten Koeffizienten.

**27.** System nach irgendeinem der Ansprüche 16 bis 24; zwei bestimmte Parameterwerte wurden jeder Zone zugeordnet, die nachfolgend der erste Parameterwert und der zweite Parameterwert genannt werden; das besagte dritte Berechnungssystem zum Ändern der Bildpunktwerte eines bestimmten Bildpunktes des besagten digitalen Bildes führt folgende Operationen aus:

- die Operation bestehend aus der Interpolierung eines ersten Parameterwertes im Verhältnis zum besagten bestimmten Bildpunkt ausgehend von den ersten Parameterwerten des besagten regulierten Parameterbildes, im Verhältnis zu den benachbarten Zonen des besagten bestimmten Bildpunktes,
- die Operation der Interpolierung eines zweiten Parameterwertes im Verhältnis zum besagten bestimmten Bildpunkt ausgehend von den zweiten Parameterwerten des besagten regulierten Parameterbildes, im Verhältnis zu den benachbarten Zonen des besagten bestimmten Bildpunktes,
- die Operation bestehend aus der Auswahl einer verfeinerten Umwandlung in Abhängigkeit vom besagten ersten Parameterwert und vom zweiten Parameterwert, die auf diese Weise interpoliert wurden,
- die Operation bestehend aus der Anwendung der besagten verfeinerten Umwandlung auf jeden der Bildpunktwerte.

28. System nach irgendeinem der Ansprüche 16 bis 27; das besagte dritte Berechnungssystem (508) zum Ändern der Bildpunktwerte eines bestimmten Bildpunktes des besagten digitalen Bildes führt folgende Operationen aus:

- die Operation bestehend aus der Berechnung eines Koeffizienten in Abhängigkeit von den Parameterwerten des besagten regulierten Parameterbildes und der besagten Bildpunktwerte,
- die Operation bestehend aus der Berechnung jedes Bildpunktwertes des besagten bestimmten Bildpunktes in Abhängigkeit vom besagten Koeffizienten und der besagten Bildpunktwerte des besagten bestimmten Bildpunktes.

29. System nach irgendeinem der Ansprüche 16 bis 28; das besagte dritte Berechnungssystem (508) zum Ändern der Bildpunktwerte eines bestimmten Bildpunktes des besagten digitalen Bildes führt folgende Operationen aus:

- die Operation bestehend aus der Berechnung eines Koeffizienten in Abhängigkeit von den Parameterwerten des besagten regulierten Parameterbildes und der besagten Bildpunktwerte,
- die Operation bestehend aus der Multiplikation jedes Bildpunktwertes des besagten bestimmten Bildpunktes mit dem besagten Koeffizienten.

30. System nach irgendeinem der Ansprüche 16 bis 29; das besagte Verfahren ist dazu bestimmt, die Helligkeit der dunklen Abschnitte (1002) des besagten digitalen Bildes (100) zu erhöhen; das besagte Verfahren ist darüber hinaus dazu bestimmt, die Helligkeit der dunklen Stellen geringer Ausdehnung des besagten digitalen Bildes (100) zu erhalten;
das besagte System enthält darüber hinaus ein viertes Berechnungssystem (902) zur Berechnung der bestimmten Parameterwerte der Zonen der besagten dunklen Stellen mit geringer Ausdehnung ausgehend von den bestimmten Parameterwerten der benachbarten Zonen, sodass die Abweichung zwischen den bestimmten Parameterwerten für die bestimmten Zonen gering ist.

**FIG.1**

$(V_{Xi1}, \ldots, V_{XiNr}) \sim (102)$

$X_i \sim (101)$

$(100)$

$(105)$

$(V_{Zj1}, \ldots, V_{ZjN}) \sim (104)$

$Z_j \sim (103)$

$(106)$

**FIG.2**

$(Z_1, V_{P11}), \ldots, (Z_1, V_{P1N})$

$(Z_k, V_{Pk1}), \ldots, (Z_k, V_{PkN})$

$(201)$

$(V_{Pj1}, \ldots, V_{PjN}) \sim (203)$

$(202)$

$Z_j \ (103)$

FIG.3

FIG.4a

FIG.4b

| --- | 100 | 100 | 100 | 10 | 10 | 20 | --- |

(4.1.1)

| --- | 0 | 0 | 90 | 0 | 10 | --- |

(4.1.2)

| 5 | 5 | 50 | 5 | 10 |

(4.1.3)

| 5 | 10 | 12 | 60 | 60 | 55 |

FIG.4c

(4.1.4)

| 5 | 2 | 48 | 0 | 5 |

(4.1.5)

| 5 | 2 | 48 | 0 | 5 |

(4.1.6)

FIG.4

FIG.5

FIG.6

FIG.7

FIG.8

FIG.9

**FIG.10**

FIG.11

FIG.12

EP 1 673 728 B1